# EUROPEAN PATENT APPLICATION

(11) **EP 4 701 351 A1**
(43) Date of publication of application: **25.02.2026**
(21) Application number: 25733310.4
(22) Date of filing: 19.06.2025
(51) Int. Cl.: H05K 1/02, H05K 5/00, H05K 5/04

(54) **FOLDABLE ELECTRONIC DEVICE COMPRISING FLEXIBLE PRINTED CIRCUIT BOARD**

(30) Priority: 10.07.2024 KR 20240091032; 25.07.2024 KR 20240098694
(71) Applicant: Samsung Electronics Co., Ltd, Suwon-si, Gyeonggi-do 16677 (KR)
(72) Inventor: CHOI, Seungjae, Suwon-si, Gyeonggi-do 16677 (KR); LEE, Howon, Suwon-si, Gyeonggi-do 16677 (KR)
(74) Representative: Appleyard Lees IP LLP
(86) International application number: PCT/KR2025/008517
(87) International publication number: WO 2026/014753

(57) **Abstract**

Disclosed is a foldable electronic device including a flexible display, a first housing and a second housing, a plurality of hinge devices connecting the first housing and the second housing such that the first housing and the second housing are rotatable around a folding axis, a flexible printed circuit board extending from the first housing to the second housing across the folding axis, and a guide member disposed to be connected to at least any one of the plurality of hinge devices, between the plurality of hinge devices, and that guides movement of the flexible printed circuit board while being rotated in correspondence to movements of the first housing and the second housing.

## Description

### [Technical Field]

An embodiment of the disclosure relates to an electronic device including a flexible printed circuit board.

### [Background Art]

A portable electronic device, such as a smartphone, may provide various functions as well as a call function based on various types of applications, and in a process of providing various functions, the portable electronic device may output to a screen corresponding to the functions. When the user uses the above-described various functions, the user may want to use a wider screen. However, when the display device becomes larger for display a screen in a general portable electronic device, an overall size thereof increases, so that portability may deteriorate. Accordingly, a foldable portable electronic device has been developed so that the size of the screen may be increased while maintaining portability. In the foldable electronic device, a flexible printed circuit board that may be flexibly changed in shape and position in correspondence to an unfolding operation and/or a folding operation may be used.

### [Disclosure]

### [Technical Solution]

A foldable electronic device (or a portable electronic device, a portable communication device, or a portable electronic device having a communication function) according to at least one embodiment may include a flexible display, a first housing and a second housing, a plurality of hinge devices connecting the first housing and the second housing such that the first housing and the second housing are rotatable around a folding axis, a flexible printed circuit board extending from the first housing to the second housing across the folding axis, and a guide member disposed to be connected to at least any one of the plurality of hinge devices, between the plurality of hinge devices, and that guides movement of the flexible printed circuit board while being rotated in correspondence to movements of the first housing and the second housing. A foldable electronic device (or a portable electronic device, a portable communication device, or a portable electronic device having a communication function) according to at least one embodiment may include a flexible display, a first housing and a second housing, a plurality of hinge devices connecting the first housing and the second housing such that the first housing and the second housing are rotatable around a folding axis, a flexible printed circuit board extending from the first housing to the second housing across the folding axis, and a guide member disposed to be connected to at least any one of the plurality of hinge devices, between the plurality of hinge devices, and that is adapted to guide movement of the flexible printed circuit board during relative rotation of the first housing and the second housing.

A foldable electronic device according to at least one embodiment may include a flexible display, a first housing and a second housing, a plurality of hinge devices connecting the first housing and the second housing such that the first housing and the second housing are rotatable around a folding axis, a hinge housing, on which at least any one of the plurality of hinge devices are seated, and including at least one side wall being parallel to the folding axis, a guide member disposed adjacent to the side wall, and rotated in correspondence to movements of the first housing and the second housing, and a flexible printed circuit board extending from the first housing to the second housing across a space between the guide member and the side wall.

### [Description of Drawings]

FIG. 1 is a block diagram of an exemplary electronic device 100 that may perform operations described in the disclosure.
FIG. 2A is a view illustrating an example of a front surface of an electronic device according to an example, and FIG. 2B is a view illustrating an example of a rear surface of an electronic device according to an example.
FIG. 3 is a view illustrating an example of an exploded perspective view of an electronic device according to an example.
FIG. 4A is a perspective view illustrating an FPCB according to an example, and FIG. 4B is a cross-sectional view illustrating an unfolded state of an electronic device including the FPCB, taken along line "A-A" in FIG. 4A.
FIG. 5 is a view illustrating an unfolded state of an electronic device including a guide member according to an example.
FIG. 6 is a view illustrating a guide member, a hinge device, and a center bar included in an electronic device according to an example.
FIG. 7 is an exploded perspective view of the guide member, the hinge device, and the center bar illustrated in FIG. 6.
FIG. 8 is a view illustrating a connection member of an electronic device according to an example.
FIG. 9 is a view illustrating a guide member of an electronic device according to an example.
FIG. 10 is a view illustrating a coupling relationship between a connection member and a guide member according to an example.
FIG. 11 is a view for explaining an unfolded state and a folded state of an electronic device according to an example.
FIG. 12 is an exploded perspective view illustrating a hinge device included in an electronic device according to an example.
FIG. 13 is a view illustrating a state, in which a hinge device and a guide member included in an electronic device are separated from each other, according to an example.
FIG. 14 is a view illustrating a behavior of a hinge device of an electronic device according to an example.
FIG. 15 is a view illustrating a behavior of a guide bracket of an electronic device according to an example.
FIG. 16 is a perspective view illustrating an electronic device according to an example.
FIG. 17 is a view illustrating a state, in which a coupling member and a guide member are separated from each other, according to an example.
FIG. 18 is a view illustrating an unfolded state and a folded state of an electronic device according to an example.
FIGS. 19A, 19B, 19C, 19D, and 19E are views illustrating a process of assembling (or coupling) an electronic device according to an example.

### [Mode for Invention]

Hereinafter, various embodiments of the disclosure may be described with reference to accompanying drawings.

An embodiment of the disclosure described below provides an electronic device including a flexible display, a side member that provides an interior space that accommodates the flexible display, a flexible board including a bending part that is electrically connected to the flexible display and is bent toward the side member, and a conductive member disposed between the side member the flexible board.

The objects according to various embodiments of the disclosure will be described as necessary in a process of describing the embodiments.

The electronic device according to an example may include at least one guide member that physically guides the shape and/or movement of the flexible printed circuit board while being rotated in correspondence to a hinge operation of at least one hinge device.

The electronic device according to an example may include at least one guide member that physically guides the flexible printed circuit board such that the flexible printed circuit board is moved along the guide member during a folding/unfolding operation (e.g., a folding operation or an unfolding operation) of the electronic device.

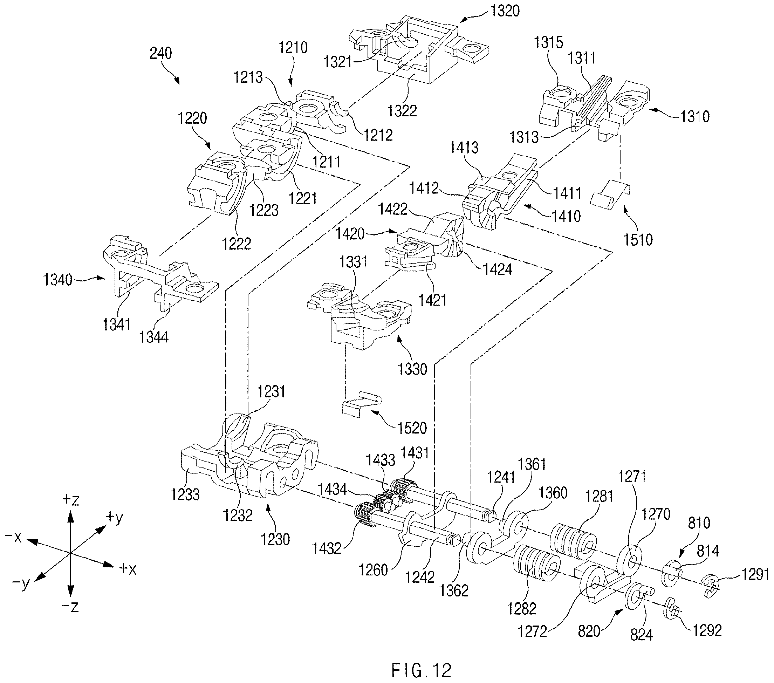

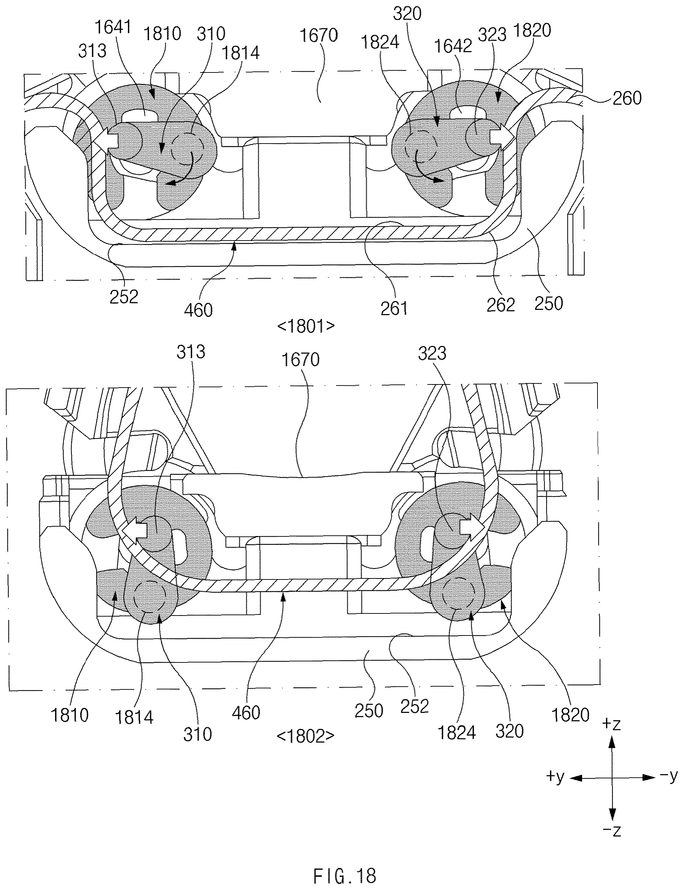

The electronic device according to an example may limit the movement of the flexible printed circuit board to a specific range by using the guide member that is coupled to at least one hinge device and is rotated around a rotation axis of a shaft (e.g., a first shaft 1241 and a second shaft 1242 of FIG. 12, or a first shaft 1641 and a second shaft 1642 of FIG. 18), or a rotation axis that is parallel to the shaft.

The electronic device according to an example may prevent or reduce abnormal behaviors of the flexible printed circuit board as it is biased to one side through the guide member during a folding operation of the electronic device.

The electronic device according to an example may include the guide member to prevent or reduce cracks from occurring at at least one bending portion included in the flexible printed circuit board.

Because the electronic device according to an example may include the guide member, the flexible printed circuit board may be prevented or reduced from being damaged due to friction and/or interference with peripheral components, and thus, durability may be secured.

In addition, various purposes and effects provided by the electronic device according to various examples may be mentioned according to examples of the detailed description.

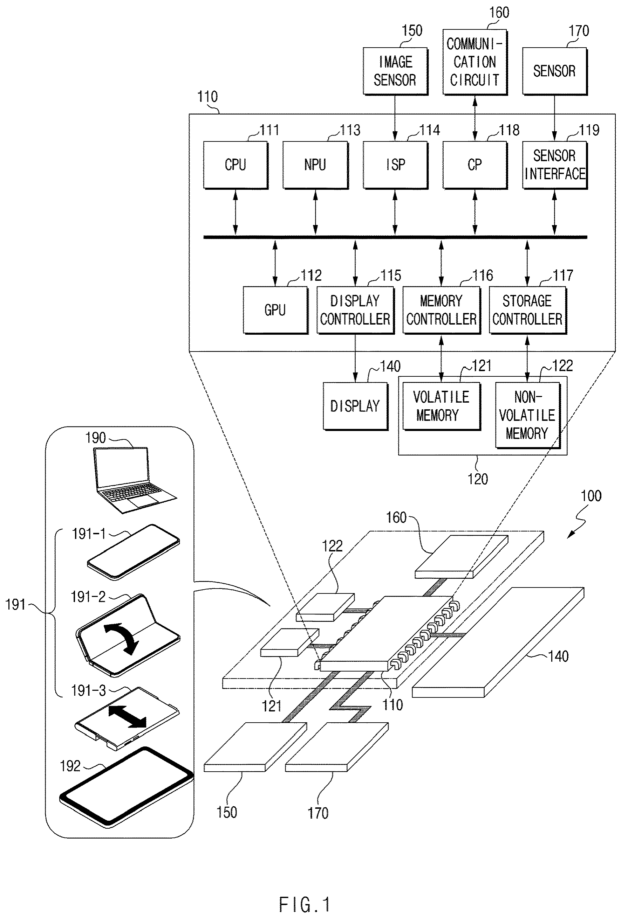

FIG. 1 illustrates a block diagram of an exemplary electronic device 100 capable of performing the operations described herein.

Referring to FIG. 1, the electronic device 100 may be one of various types of electronic devices, such as a notebook computer 190, smartphones 191 having various form factors (e.g., a bar-type smartphone 191-1, a foldable smartphone 191-2, or a slidable (or rollable) smartphone 191-3), a tablet PC 192, a cellular telephone (not shown), and any other similar computing devices (not shown). The components illustrated in FIG. 1, the relationships thereof, and the functions thereof are merely for illustration, and are not intended to limit the implementations described or claimed in the disclosure thereto. The electronic device 100 may be referred to as a mobile device, a user equipment, a multifunctional device, a portable device, or a server.

The electronic device 100 may comprise various components including at least one processor 110 (hereinafter, the processor 110), at least one memory 120 (hereinafter, the memory 120), at least one display 140 (hereinafter, the display 140), at least one image sensor 150 (hereinafter, the image sensor 150), at least one communication circuitry 160 (hereinafter, the communication circuitry 160), and/or at least one sensor 170 (hereinafter, the sensor 170). The aforementioned components are merely of an example. For example, the electronic device 100 may comprise other components (e.g., a power management integrated circuitry (PMIC), an audio processing circuitry, an antenna, a rechargeable battery, or an input/output interface). For example, some components may be omitted from the electronic device (100). For example, some components may be integrated into one component.

The processor 110 may be implemented as one or more integrated circuit (or circuitry) (IC) chips and may perform various data processing. The processor 110 may include at least one electrical circuitry and may process instructions (or program, data, and so on) stored in the memory 120 individually or collectively in a distributed manner. The processor 110 may include a processor assembly that includes one or more processing circuitries. The processor may include any processing circuitry that may be operative for controlling operations and performance of one or more components (e.g., the memory 120, a display 140, the image sensor 150, the communication circuitry 160, and/or the sensor 170) of the electronic device. For example, the processor 110 (e.g., an application processor (AP)) may be implemented as a system on chip (SoC) (e.g., one chip or chipset). For example, the processor 110 may be implemented as a plurality of cores (or at least one core circuitry), a plurality of chips, or a plurality of chipsets. For example, the processor 110 may comprise one or more processing circuitry. For example, the processor 110 may comprise one or more processing circuitry which are individually and/or collectively configured to perform various functions of the present disclosure. As a non-limiting example, at least a portion of the processor 110 may be included in a first chip of the electronic device 100 and at least another portion of the processor 110 may be included in a second chip of the electronic device 100 different from the first chip of the electronic device 100.

For example, the processor 110 may comprise a central processing unit (CPU) 111, a graphics processing unit (GPU) 112, a neural processing unit (NPU) 113, an image signal processor (ISP) 114, a display controller 115, a memory controller 116, a storage controller 117, a communication processor (CP) 118, and/or a sensor interface 119. These components of the processor 110 are merely of an example.

For example, the processor 110 may further comprise other components. For example, some components of the processor 110 may be omitted from the processor 110. For example, some components of the processor 110 may be included as separate components of the electronic device 100 outside the processor 110. For example, some components of the processor 110 (e.g., the memory controller 116) may be included in other components of the electronic device 100 (e.g., at least a portion of the memory 120, an interface (e.g., usable for connecting to at least one component of the electronic device 100), the display 140, and/or the image sensor 150).

The processor 110 may cause other components of the electronic device 100 to perform various operations by executing instructions stored in the memory 120. The CPU 111 (or a central processing circuitry) may be configured to control the components of the processor 110 based on execution of instructions stored in the memory 120 (e.g., the volatile memory 121 and/or the non-volatile memory 122). The GPU 112 (or a graphic processing circuitry) may be configured to execute parallel computations (e.g., rendering). The NPU 113 (or a neural processing circuitry, or an artificial intelligence (AI) chip) may be configured to execute operations (e.g., convolution computations) for an artificial intelligence model. The ISP 114 (or an image signal processing circuitry) may be configured to process a raw image obtained from the image sensor 150 in a format suitable for a component in the electronic device 100 or a component of the processor 110. The display controller 115 (or a display control circuitry, or a display processing unit (DPU)) may be configured to process an image obtained from the CPU 111, the GPU 112, the ISP 114, or the memory 120 (e.g., the volatile memory 121) in a format suitable for the display 140. The memory controller 116 (or a memory control circuitry) may be configured to control reading data from the volatile memory 121 and writing data to the volatile memory 121. The storage controller 117 (or a storage control circuitry) may be configured to control reading data from the non-volatile memory 122 and writing data to the non-volatile memory 122. The CP 118 (or a communication processing circuitry) may be configured to process data obtained from a component of the processor 110 in a format suitable for transmission to another electronic device via the communication circuitry 160, or to process data obtained from another electronic device via the communication circuitry 160 in a format suitable for processing of the component of the processor 110. For example, the communication circuitry 160 may comprise one or more communication circuitry. The sensor interface 119 (or a sensing data processing circuitry, a sensor hub) may be configured to process data on a state of the electronic device 100 and/or a state around the electronic device 100, obtained through the sensor 170, in a format suitable for a component of the processor 110.

The memory 120 may comprise one or more storage mediums (or one or more storage devices). For example, the memory 120 may include a memory assembly that includes one or more storage mediums. For example, the one or more storage mediums may comprise a permanent memory (e.g., the non-volatile memory 122) such as a hard drive, a flash memory, a read-only memory (ROM), a semi-permanent memory (e.g., the volatile memory 121) such as a random access memory (RAM), a storage (or a storage assembly) of any other suitable type, or any combination thereof. The memory 120 may comprise a cache memory which is a memory of one or more different types used to store data for performing a function or feature of the electronic device 100 at least temporarily. As a non-limiting example, the cache memory may be included in the processor 110. The memory 120 may be fixedly embedded within the electronic device 100, or may be incorporated onto one or more suitable types of components that may be repeatedly inserted into the electronic device 100, and removed from the electronic device 100 (e.g., a subscriber identity module (SIM) card, and/or a secure digital (SD) card).

For example, the memory 120 may store one or more software applications such as an operating system (or a system) software application, a firmware software application, a driver software application, a plug-in (e.g., add-in, add-on, and/or applet) software application, and/or any other suitable software application. For example, the one or more software applications may include instructions executable by the processor 110. For example, the memory 120 may store instructions callable by an application programming interface (API). For example, the memory 120 may store instructions in a library.

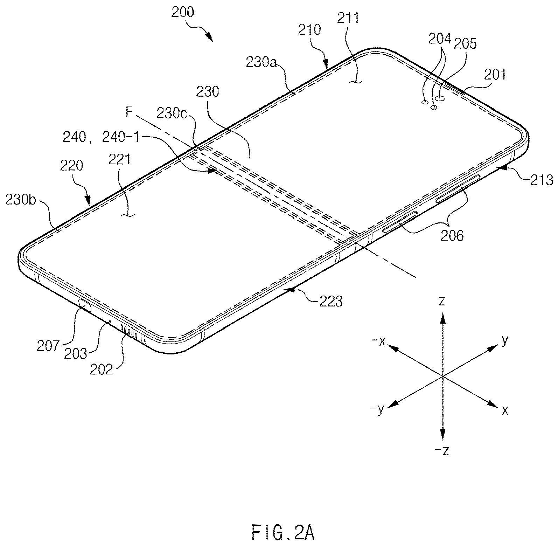

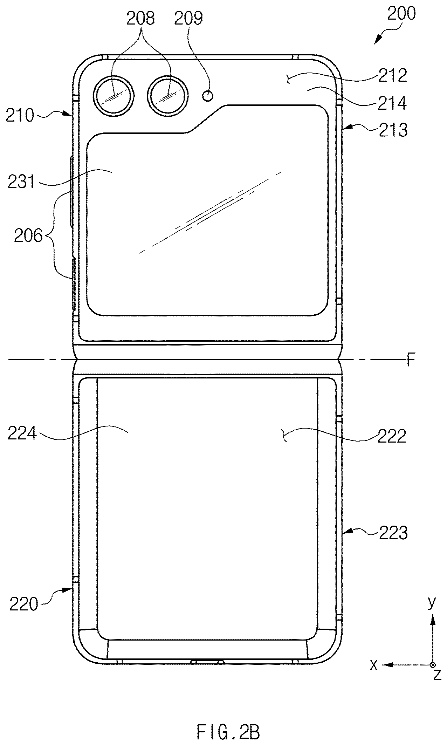

FIG. 2A is a perspective view of a front surface of an electronic device according to an example. FIG. 2B is a plan view of a rear surface of the electronic device according to an example.

Referring to FIGS. 2A and 2B, an electronic device 200 includes a first housing 210 (e.g., a first housing structure) including a first side member 213 (e.g., a side bezel) and a second housing 220 (e.g., a second housing structure) including a second side member 223 (e.g., a side bezel), wherein the first housing 210 and the second housing 220 are coupled to each other to be folded with respect to each other around a folding axis "F" through at least one hinge device 240 and 240-1 (e.g., a hinge module or a hinge structure). For example, the first housing 210 and the second housing 220 are configured as foldable housings (e.g., housing structures). For example, the electronic device 200 includes a first display 230 (e.g., a flexible display, a foldable display, or a main display) that is disposed to be supported by the first housing 210 and the second housing 220. For example, the first housing 210 includes a first surface 211, and a second surface 212 that faces in an opposite direction (e.g., the -z-axis direction) to the first surface 211. For example, the second housing 220 includes a third surface 221, and a fourth surface 222 that faces in an opposite direction (e.g., the -z-axis direction) to the third surface 221. For example, the first housing 210 includes a first rear cover 214 that is coupled to the first side member 213. For example, the second housing 220 includes a second rear cover 224 that is coupled to the second side member 223. For example, when the electronic device 200 is in a fully unfolded first state (e.g., an unfolding state or an unfolded state), the first surface 211 and the third surface 221 may be operated to face substantially the same direction (e.g., the z-axis direction). For example, when the electronic device 200 is in a fully folded second state (e.g., a folding state or a folded state), the first surface 211 and the third surface 221 may be operated to face each other or to face opposite directions. For example, the electronic device 200 may be operated to be maintained in a third state (e.g., an intermediate state) between the first state and the second state.

According to an example, the electronic device 200 includes a receiver 201 that is disposed on the first surface 211 of the first housing 210, at least one sensor module 204 (e.g., an illuminance sensor), and/or at least one first camera module 205 (e.g., an under display camera (UDC)). For example, the electronic device 200 includes at least one key 206 that is disposed in the first side member 213. For example, the electronic device 200 includes a second display 231 (e.g., a sub-display), at least one second camera module 208, and/or a flash 209 that are disposed on the second surface 212 (e.g., the first rear cover 214) of the first housing 210. For example, the second display 231 is disposed to be viewed from the outside through at least a portion of the first rear cover 214. For example, the electronic device 200 includes a speaker 202, a microphone 203, or a connector port 207 that are disposed on the second side member 223. At least some of the plurality of components described above may be disposed in the first housing 210 and/or the second housing 220 through changes.

According to an example, the first display 230 (e.g., the flexible display) includes a first area 230a (e.g., a first planar part) corresponding to at least a portion of the first surface 211, a second area 230b (e.g., a second planar part) corresponding to at least a portion of the third surface 221, and a third area 230c (e.g., a folding part) that connects the first area 230a and the second area 230b, and in which the electronic device 200 is changed from the second state (e.g., the folding state) and/or the third state (e.g., the intermediate state). For example, the third area 230c is disposed in a position, in which the first display 230 at least partially overlaps at least one hinge device 240 and 240-1 when it is viewed from a top (e.g., in the z-axis direction). For example, in the second state, the first display 230 is disposed such that the first surface 211 and the third surface 221 face each other so as not to be viewed from the outside (e.g., an in-fold type). For example, in the second state, the first display 230 is disposed such that the first surface 211 and the third surface 221 face opposite directions to be viewed from the outside (e.g., an out-fold type).

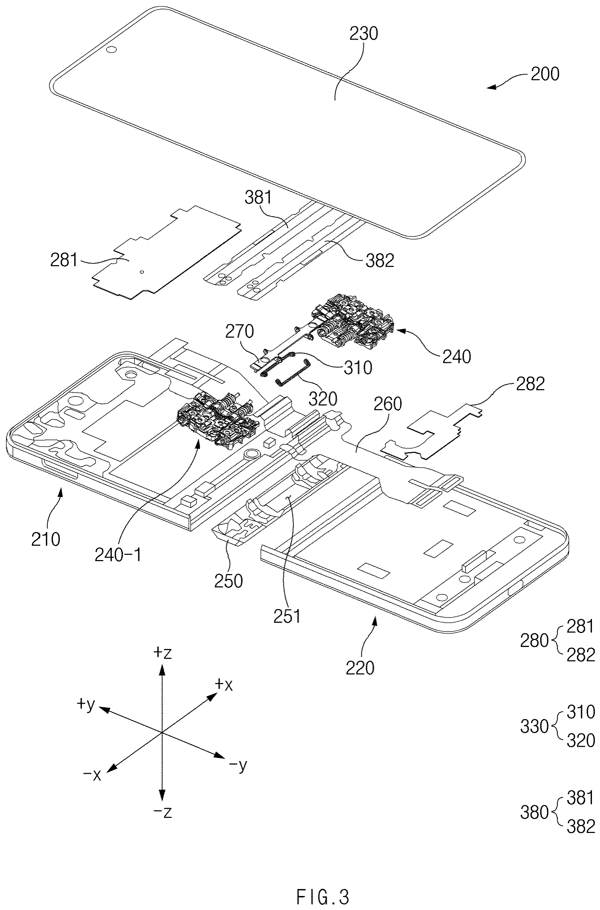

FIG. 3 is a partially exploded perspective view of the electronic device of FIGS. 2A and 2B including a hinge device according to an example.

Referring to FIG. 3, the electronic device 200 (e.g., the electronic device 100 of FIG. 1 or the electronic device 200 of FIGS. 2A and 2B) according to an embodiment includes at least one hinge device 240 and 240-1 that is disposed between the first housing 210 and the second housing 220 that define a portion of the exterior of the electronic device 200. At least one hinge device 240 and 240-1 may connect the first housing 210 and the second housing 220 at a lower portion (e.g., in the -z-axis direction) of the first display 230. At least one hinge device 240 and 240-1 couple the first housing 210 and the second housing 220 such that they are rotatable. For example, at least one hinge device 240 and 240-1 includes a first hinge device 240, and a second hinge device 240-1 that is spaced from the first hinge device 240 along a direction (e.g., the x-axis direction) that is parallel to the folding axis (or the center bar 270). The plurality of hinge devices 240 and 240-1 are disposed between the first housing 210 and the second housing 220 not to be viewed from the outside through the hinge housing 250. At least a portion of a plurality of hinge devices 240 and 240-1 may be accommodated in an interior space 251 of the hinge housing 250.

According to an example, a plurality of hinge devices 240 and 240-1 are provided. At least some of a plurality of hinge devices 240 and 240-1 have similar structures and shapes. FIG. 3 illustrates a structure, in which two similar or the same hinge devices 240 and 240-1 are disposed in the hinge housing 250, for example, but the disclosure is not limited thereto, and other types of hinge devices may be mounted on the hinge housing 250. Some of the at least one hinge device 240 and 240-1 may perform a hinge operation while being connected to each other through the guide member 330.

The electronic device 200 according to an example may includes at least one center bar 270 (or a center support part, a center cover part, and a center plate) that is disposed between the plurality of hinge devices 240 and 240-1. The center bar 270 is formed across a flexible printed circuit board (FPCB) 260, between the plurality of hinge devices 240 and 240-1. The center bar 270 is disposed between the third area (e.g., the second area 230c of FIG. 2B) of the display 230 and the FPCB 260. The center bar 270 supports at least a portion of the third area of the display 230, which is not supported by at least any one of the plurality of hinge devices 240 and 240-1 when the electronic device 200 is in the unfolded state.

The electronic device 200 according to an example may includes at least one wing plate 380 that supports the rear surface (e.g., the surface that faces the -z axis) of the display 230, between the at least one hinge device 240 and 240-1 and the display 230. The wing plate 380 is coupled to at least one hinge device 240 and 240-1 to cover at least a portion of the surface of at least one hinge device 240 and 240-1 in the z-axis direction when the electronic device 200 is in the unfolded state. The wing plate 380 is provided in a form, in which it is separated from the housings 210 and 220. Accordingly, a gap may be formed between the wing plate 380 and the housings 210 and 220. A plurality of wing plates 380 are provided and disposed on opposite sides with the center bar 270 interposed therebetween. For example, the first wing plate 381 is located in the +y-axis direction with respect to the center bar 270, and the second wing plate 382 is located in the -y-axis direction with respect to the center bar 270. With the wing plates 380 coupled to the hinge devices 240 and 240-1, the wing plates 380 are disposed at the same height or on the same xy plane as that of the center bar 270 with respect to the z-axis. The wing plates 380 may be rotated clockwise or counterclockwise depending on a hinge operation of at least one hinge device 240 and 240-1. For example, the second wing plate 382 may be rotated clockwise while the first wing plate 381 is rotated counterclockwise, and the second wing plate 382 may be rotated counterclockwise while the first wing plate 381 is rotated clockwise.

The electronic device according to an example includes a printed circuit board (PCB) 280 that is disposed in the first housing 210 and/or the second housing 220. In the printed circuit board 280, components for implementing various functions of the foldable electronic device 200 are separately disposed. According to an example, the printed circuit board 280 includes a first printed circuit board (or a main PCB) 281 or a second printed circuit board (or a sub-PCB) 282. According to an example, the first printed circuit board 281 is disposed in a space that is defined by the first housing 210, and the second printed circuit board 282 is disposed in a space that is defined by the second housing 220.

According to an example, the electronic device 200 includes an FPCB 260 that connects the first printed circuit board 281 and the second printed circuit board 282. For example, one end of the FPCB 260 is electrically connected to the first printed circuit board 281, and an opposite end thereof is electrically connected to the second printed circuit board 282. At least a portion of the FPCB 260 is disposed in the first housing 210, the second housing 220, and/or the hinge housing 250. According to an example, the FPCB 260 is configured to have flexibility. For example, the FPCB 260 may be operated to be folded according to the folding operation of the foldable electronic device 200, and may be operated to be unfolded according to the folding operation of the foldable electronic device 200. According to an example, at least one FPCB 260 may be provided. For example, the FPCB 260 may further include a sub-FPCB (not illustrated) although not illustrated.

According to an example, the electronic device 200 includes a guide member 330 (or a guide bracket or a guide fixing part) that is disposed parallel to the center bar 270 and crosses the FPCB 260. The guide member 330 is coupled to each of the plurality of hinge devices 240 and 240-1, between the plurality of hinge devices 240 and 240-1. The guide member 330 includes a first guide member 310 and/or a second guide member 320. The first guide member 310 is formed to be symmetrical to the second guide member 320 with respect to the center bar 270 corresponding to the folding axis "F". The first guide member 310 and the second guide member 320 are disposed on opposite sides with the center bar 270 interposed therebetween. For example, the first guide member 310 is located in the +y-axis direction with respect to the center bar 270, and the second guide member 320 is located in the -y-axis direction with respect to the center bar 270. The first guide member 310 is located between the center bar 270 and the first wing plate 381, and the second guide member 320 is located between the center bar 270 and the first wing plate 381.

According to an example, the guide member 330 may be rotated clockwise or counterclockwise depending on a hinge operation of the at least one hinge device 240 and 240-1. While the first guide member 310 is rotated counterclockwise, the second guide member 320 may be rotated clockwise, and while the first guide member 310 is rotated clockwise, the second guide member 320 may be rotated counterclockwise. The first guide member 310 and the second guide member 320 are configured to guide the movement of the FPCB 260 while being rotated. The guide member 330 guides the shaping (or shape) of the FPCB 260 when the FPCB 260 is unfolded or folded according to the unfolding or folding operation of the foldable electronic device 200. The guide member 330 may prevent the FPCB 260 from being abnormally shaped (e.g., shaped to be biased to one side or shaped asymmetrically) while being rotated according to the unfolding or folding operation of the foldable electronic device 200.

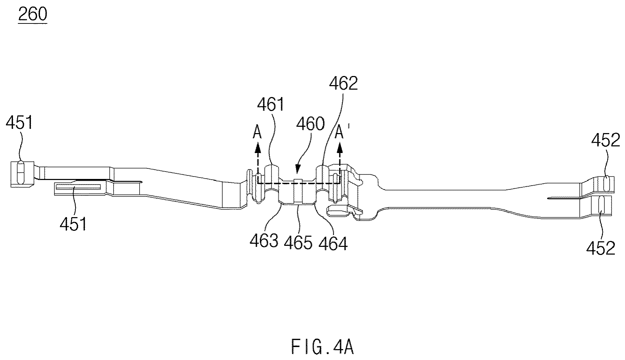

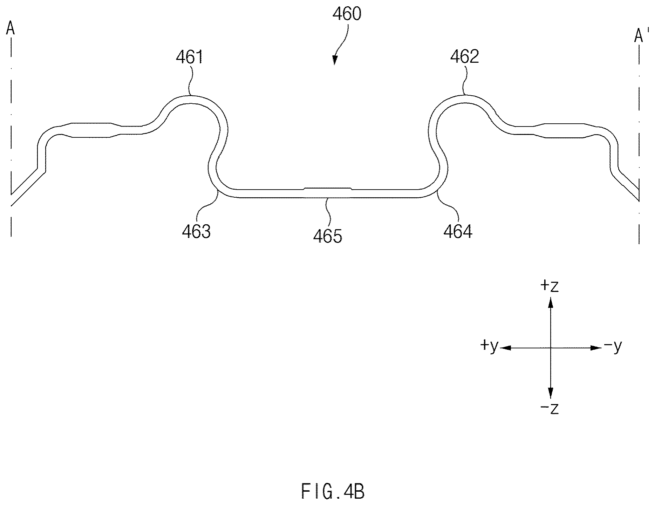

FIG. 4A is a perspective view illustrating an FPCB according to an example, and FIG. 4B is a cross-sectional view illustrating an unfolded state of an electronic device including the FPCB, taken along line "A-A" in FIG. 4A.

Referring to FIGS. 3, 4A, and 4B, the FPCB 260 includes a plurality of connectors 451 and 452. As an example, the FPCB 260 includes at least one first connector 451 that is formed at one end (e.g., an end that faces the +y axis) of the FPCB 260 and at least one second connector 452 that is formed at an opposite end (e.g., an end that faces the -y axis) of the FPCB 260. At least one first connector 451 electrically connects the FPCB 260 and the first printed circuit board 281, and at least one second connector 452 electrically connects the FPCB 260 and the second printed circuit board 282.

At least a portion of the FPCB 260 according to an example is formed in a curved shape to avoid interference between the hinge housing 250 and peripheral mechanisms. At least a portion of the FPCB 260 is formed to be bent into a specific curved shape in a single product state before the assembly process of the electronic device 200 using a pre-bending jig. As an example, because the FPCB 260 includes a plurality of bending parts 461, 462, 463, and 464 in an area corresponding to the hinge device 240 and 240-1, the FPCB 260 has a marginal length for accommodating a length change according to a folding operation of the foldable electronic device 200. The FPCB 260 including the plurality of bending parts 461, 462, 463, and 464 have a restoring force for accommodating a length change caused by a folding operation of the foldable electronic device 200.

According to an example, the FPCB 260 includes a flexible area (or a variable area, a bendable area, or a bending area) 460 that is accommodated in the hinge housing 250. The flexible area 460 is configured to be movable in the hinge housing 250 during a folding operation or an unfolding operation of the foldable electronic device 200. The shape of the flexible area 460 may vary in the hinge housing 250 in correspondence to the behavior of the hinge devices 240 and 240-1.

In an example, the FPCB 260 may be folded or unfolded according to an unfolding operation or a folding operation of the foldable electronic device 200. For example, at least a portion of the flexible area 460 of the FPCB 260 may be folded in the unfolded state of the foldable electronic device 200. For example, at least a portion of the flexible area 460 of the FPCB 260 may be unfolded in the folded state of the foldable electronic device 200.

According to an example, the flexible area 460 of the FPCB 260 is an area that defines a plurality of bending parts 461, 462, 463, and 464 as the foldable electronic device 200 is converted into a folded state or an unfolded state. For example, the flexible area 460 includes a first bending part 461 and a third bending part 463 that are disposed on one side (e.g., a side that faces the +y axis) with respect to a central part 465, and a second bending part 462 and a fourth bending part 464 that are disposed on an opposite side (e.g., a side that faces the -y axis) with respect to the central part 465. The first bending part 461 is disposed between one side of the central part 465 and the first connector 451 and is bent to correspond to the folding angle of the electronic device. The second bending part 462 is disposed between an opposite side of the central part 465 and the second connector 452 and is bent to correspond to the folding angle of the electronic device. The second bending part 462 is formed to be symmetrical to the first bending part 461 with respect to the central part 465 (or the z axis). The third bending part 463 is disposed between the first bending part 461 and the central part 465, and is bent in an opposite direction to the first bending part 461. The fourth bending part 464 is disposed between the second bending part 462 and the central part 465, and is bent in an opposite direction to the second bending part 462. The fourth bending part 464 is formed to be symmetrical to the third bending part 463 with respect to the central part 465 (or the z axis)

According to an example, the position and/or curvature of at least any one of the first bending part 461, the second bending part 462, the third bending part 463, and the fourth bending part 464 and the length of the central part 465 may vary depending on the folding angle of the foldable electronic device 200. The position and/or the shape (e.g., the curvature) of at least any one of the first bending part 461, the second bending part 462, the third bending part 463, and the fourth bending part 464 and the position and/or the shape (e.g., the length) of the central part 465 may be different in the unfolded state of the electronic device 200 and the folded state of the electronic device 200.

According to an example, when the folding operation of the electronic device is repeated, the flexible area 460 of the FPCB 260 is temporarily biased to one side, so that the curvature of the bending parts 461, 462, 463, and 464 is decreased, and the bending stress of the bending parts 461, 462, 463, and 464 having the decreased curvature is increased, and thus, the FPCB 260 may be damaged. The guide member 330 may be disposed adjacent to the flexible area 460 of the FPCB 260 to prevent damage to the FPCB 260.

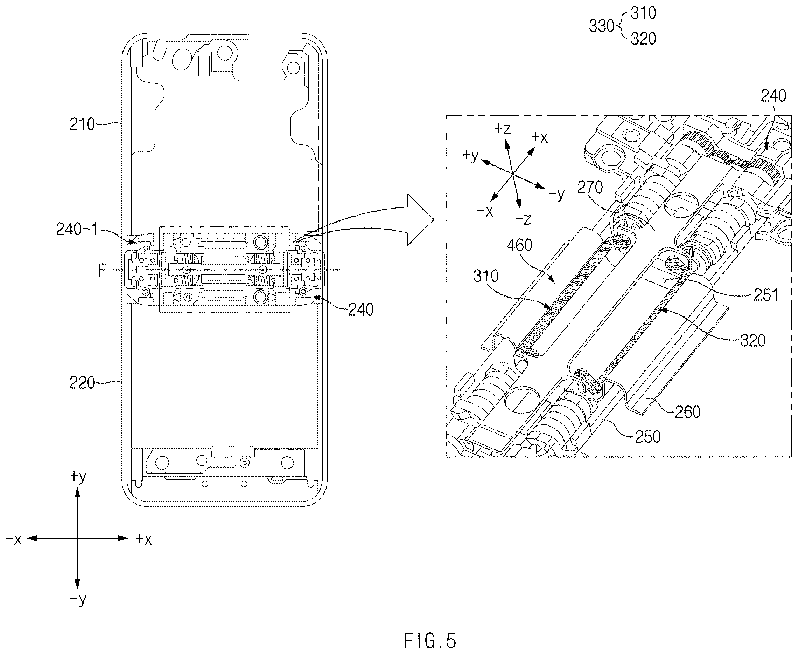

FIG. 5 is a view illustrating an unfolded state of an electronic device including a guide member according to an example.

Referring to FIGS. 3, 4A, 4B, and 5, the electronic device 200 (e.g., the electronic device 100 of FIG. 1, or the electronic device 200 of FIG. 2A and FIG. 2B) according to an example may perform a folding operation or an unfolding operation in the widthwise direction (e.g., an x-axis direction) of the housings 210 and 220 with respect to the folding axis "F". The electronic device according to an example includes a guide member 330 that is coupled to each of the at least one hinge device 240 and 240-1. The guide member 330 includes a first guide member 310 and/or a second guide member 320 that are spaced apart from each other. The first guide member 310 is located on one side with respect to the center bar 270, and the second guide member 320 is located on an opposite side with respect to the center bar 270. At least a portion of each of the first guide member 310 and the second guide member 320 is disposed in the interior space of the hinge housing 250 together with at least a portion of the flexible area 460 of the FPCB 260. A flexible area 460 of the FPCB 260 is disposed between each of the first guide member 310 and the second guide member 320, and the hinge housing 250.

According to an example, the guide member 330 may physically guide the behavior of the FPCB 260 while being rotated during the folding operation of the electronic device 200. The electronic device 200 according to an example may prevent or reduce an abnormal behavior of the flexible area 460 of the FPCB 260 being biased to one side during a folding operation of the electronic device 200 by the guide member 330. As the FPCB 260 is normally moved by the guide member 330, damage to the FPCB 260 that may occur due to friction and/or interference between the FPCB 260 and the peripheral devices (or components) may be prevented or reduced, and thus, durability may be secured.

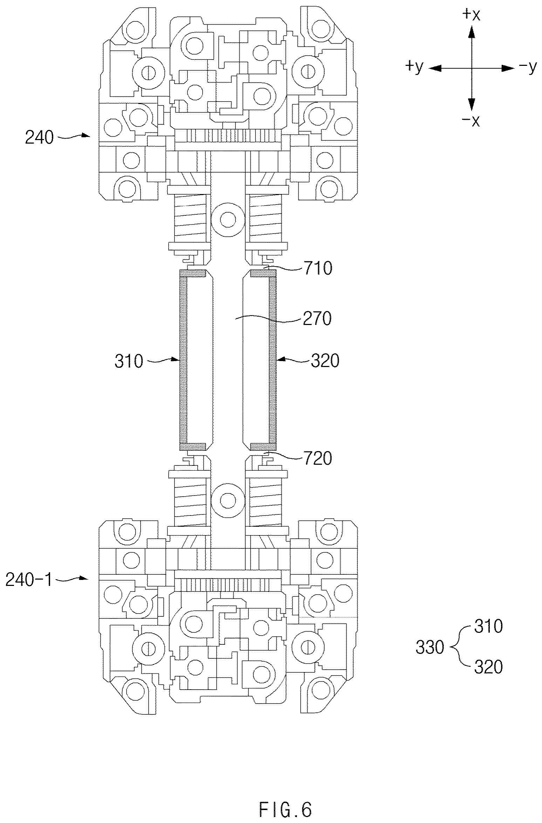

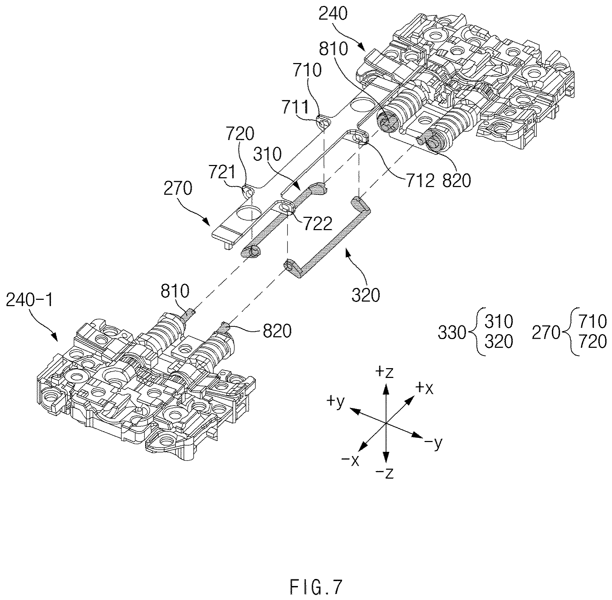

FIG. 6 is a view illustrating the guide member, the hinge device, and the center bar included in an electronic device according to an example, and FIG. 7 is an exploded perspective view of the guide member, the hinge device, and the center bar illustrated in FIG. 6.

Referring to FIGS. 3 to 7, the electronic device 200 according to an example includes a center bar 270 that is disposed to face a partial area of the display 230. The center bar 270 at least partially overlaps a third area (e.g., the third area 230c of FIG. 2A) of the display 230. At least a portion of the center bar 270 is disposed between the first hinge device 240 and the second hinge device 240-1.

According to an example, the center bar 270 may be moved in the +z-axis and/or -z-axis direction during a folding operation and an unfolding operation of the electronic device 200. The center bar 270 may be moved in a direction (e.g., the +z-axis direction), in which it contacts or becomes closer to the third area of the display 230 so that the third area of the display 230 remains planar (or flat) in the unfolded state of the electronic device 200. The center bar 270 may be moved in a direction (e.g., the -z-axis direction) that becomes more distant from the third area as not to contact the third area in the folded state of the electronic device 200.

The center bar 270 includes a bar part 730 and at least one holder part 710 and 720.

The bar part 730 is disposed between the first hinge device 240 and the second hinge device 240-1. The bar part 730 is disposed between the third area of the display 230 and the FPCB 260.

At least one holder part 710 and 720 protrudes in opposite sides (the -y-axis and +y-axis directions) with respect to the bar part 730. The at least one holder part 710 and 720 includes a first holder part 710 and a second holder part 720 that are disposed to be spaced apart from each other between the first hinge device 240 and the second hinge device 240-1.

The first holder part 710 includes a first holding hole 711, in which a portion of the first connection member 810 of the first hinge device 240 is inserted and/or held, and a second holding hole 712, in which a portion of the second connection member 820 of the first hinge device 240 is inserted and/or held. The second holder part 720 includes a third holding hole 721, in which a part of the first connection member 810 of the second hinge device 240-1 is inserted and/or held, and a fourth holding hole 722, in which the second connection member 820 of the second hinge device 240-1 is inserted and/or held.

The first hinge device 240 and/or the second hinge device 240-1 includes a first connection member 810 and a second connection member 820 that extend in a direction that is parallel to the bar part 730 of the center bar 270. According to an example, a portion of the first connection member 810 and/or the second connection member 820 of the first hinge device 240 protrudes toward the second hinge device 240-1, and a portion of the first connection member 810 and/or the second connection member 820 of the second hinge device 240-1 protrudes toward the first hinge device 240. According to an example, at least a portion of the first connection member 810 protrudes toward the first guide member 310 in a direction that is parallel to a portion of the first guide member 310. At least a portion of the second connection member 820 protrudes toward the second guide member 320 in a direction that is parallel to a portion of the second guide member 320. According to an example, at least a portion of at least any one of the first connection member 810 and the second connection member 820 is at least a portion of a center bar guide of the hinge device 240 and 240-1 that is rotated to implement a linear movement (or an upward/downward movement) of the center bar.

The guide member 330 includes a first guide member 310 and a second guide member 320 that are disposed between the first hinge device 240 and the second hinge device 240-1. The first guide member 310 is coupled to the first connection member 810 of the first hinge device 240, which has passed through the first holding hole 711. The first guide member 310 is coupled to the first connection member 810 of the second hinge device 240-1, which has passed through the third holding hole 721. The second guide member 320 is coupled to the second connection member 820 of the first hinge device 240, which has passed through the second holding hole 712. The second guide member 320 is coupled to the second connection member 820 of the second hinge device 240-1, which has passed through the fourth holding hole 722.

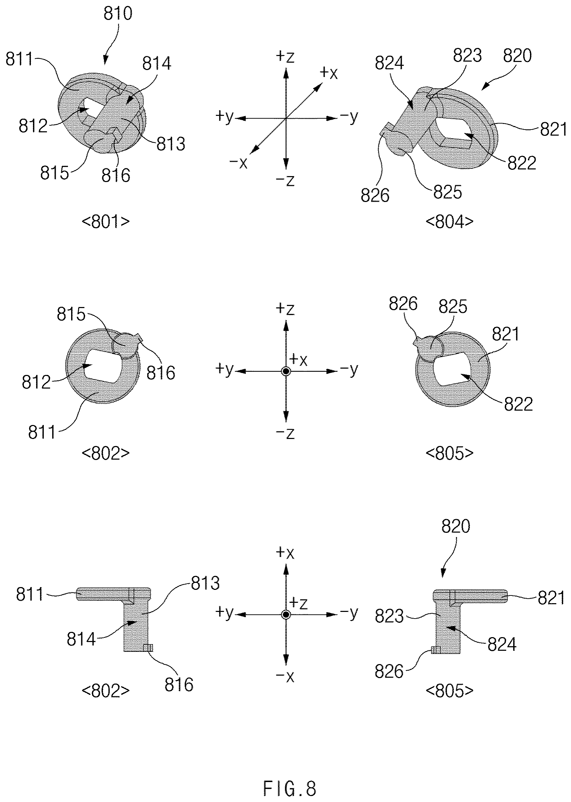

FIG. 8 is a view illustrating a connection member of an electronic device according to an example. In FIG. 8, <801> is a perspective view illustrating the first connection member 810 according to an example, <802> is a view of the first connection member 810 according to an example, when viewed in the x-axis direction, <803> is a view of the first connection member 810 according to an example, when viewed in the z-axis direction, <804> is a perspective view illustrating the second connection member 820 according to an example, <805> is a view of the second connection member 820 according to an example, when viewed in the x-axis direction, and <806> is a view of the second connection member 820 according to an example, when viewed in the z-axis direction.

In FIG. 8, the first connection member 810 is mainly described, and the description thereof may be applied to the description of the second connection member 820 that is entirely or partially the same as the configuration of the first connection member 810. For example, the description of the first connection base 811, the first connection opening 812, the first connection guide pin 814 (or the first guide pin 814), and the first connection rib 816 included in the first connection member 810 may be applied to the description of the second connection base 821, the second connection opening 822, the second connection guide pin 824 (or the second guide pin 824), and the second connection rib 826 included in the second connection member 820.

Referring to FIG. 8, the first connection member 810 includes a first connection base 811 including a first connection opening 812. The first connection opening 812 is formed in a shape of a hole that passes through a portion of the first connection base 811 in a thickness direction (e.g., the x-axis direction) of the first connection base 811. The first connection base 811 is formed to surround the first connection opening 812. According to an example, a first shaft (e.g., a first shaft 1241 of FIG. 12) of the hinge device 240 and 240-1 is inserted into the first connection opening 812, and a second shaft (e.g., a second shaft 1242 of FIG. 12) of the hinge device 240 and 240-1 is inserted into the second connection opening 822 of the second connection member 820.

According to an example, the first connection member 810 includes a first connection guide pin 814 that protrudes from a portion of the first connection base 811 in a thickness direction (e.g., the x-axis direction) (or a depth direction of the first connection opening 812). The first connection guide pin 814 includes a first protruding surface 813 that contacts the first connection base 811, and a second protruding surface 815 that is bent on the first protruding surface 813. The first protruding surface 813 is disposed between the first connection base 811 and the second protruding surface 815. The second protruding surface 815 is formed to face the protrusion direction (e.g., the x-axis direction) of the first connection guide pin 814. For example, a protrusion length (e.g., a length in the x-axis direction) of the first connection guide pin 814 is formed to be greater than a depth of the first connection opening 812.

According to an example, the first connection member 810 includes a first connection rib 816 that extends from the first connection guide pin 814. The first connection rib 816 is disposed adjacent (or to contact) the second protruding surface 815. The first connection rib 816 is formed to protrude from the first protruding surface 813 of the first connection guide pin 814. The protrusion direction of the first connection rib 816 and the protrusion direction of the first connection guide pin 814 may be different. As an example, the protrusion direction of the first connection rib 816 may be perpendicular to the protrusion direction of the first connection guide pin 814.

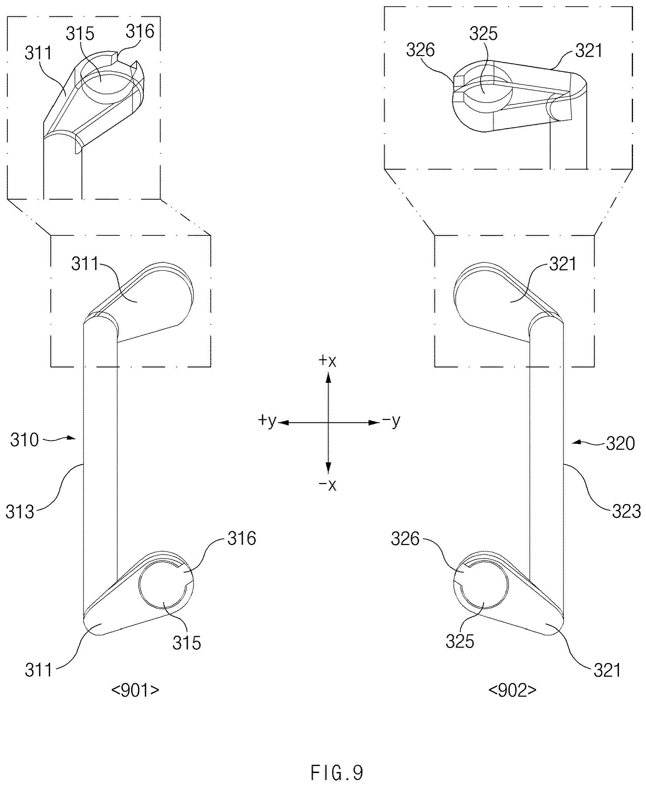

FIG. 9 is a view illustrating a guide member of an electronic device according to an example. In FIG. 9, <901> is a perspective view illustrating the first guide member 310 according to an example, and <902> is a perspective view illustrating the second guide member 320 according to an example.

In FIG. 9, the first guide member 310 is mainly described, and the description thereof may be applied to the description of the second guide member 320 that is entirely or partially the same as the configuration of the first guide member 310. For example, the description of the first guide bar 313, the first extension part 311, the first pin opening 315, and the first rib opening 316 included in the first guide member 310 may be applied to the description of the second guide bar 323, the second extension part 321, the second pin opening 325, and the second rib opening 326 included in the second guide member 320.

Referring to FIGS. 3 to 9, according to an example, the first guide member 310 includes a first guide bar 313 that is disposed between the plurality of hinge devices 240 and 240-1. The first guide bar 313 is formed long in the x-axis direction. The first guide member 310 includes a first extension part 311 that extends perpendicular to the first guide bar 313 from at least one side of the first guide bar 313. As an example, the first extension part 311 may extend from opposite sides of the first guide bar 313.

According to an example, a first pin opening 315 and a first rib opening 316 are formed in the first extension part 311. At least one of the first pin opening 315 and the first rib opening 316 is formed in a groove shape. The first pin opening 315 is formed in a groove shape having a depth that is parallel to a lengthwise direction (e.g., the x-axis direction) of the first guide bar 313. The first rib opening 316 is formed in a shape that is opened in a direction that is perpendicular to a depth direction (e.g., the x-axis direction) (or a lengthwise direction) of the first guide bar 313. The first rib opening 316 is formed to be connected to the first pin opening 315.

According to an example, the first pin opening 315 of the first extension part 311 are formed at a position corresponding to the first connection guide pin 814 of the first connection member 810 of the first hinge device 240. According to an example, the first rib opening 316 of the first extension part 311 is formed at a position corresponding to the first connection rib 816 of the first connection member 810 of the first hinge device 240.

According to an example, at least any one of the first rib opening 316 and the first pin opening 315 formed in the first extension part 311 that extends from one side of the first guide bar 313 is formed to be opened toward the first connection member 810 of the first hinge device 240. At least any one of the first rib opening 316 and the first pin opening 315 formed in the first extension part 311 that extends from an opposite side of the first guide bar 313 is formed to be opened toward the first connection member 810 of the second hinge device 240-1.

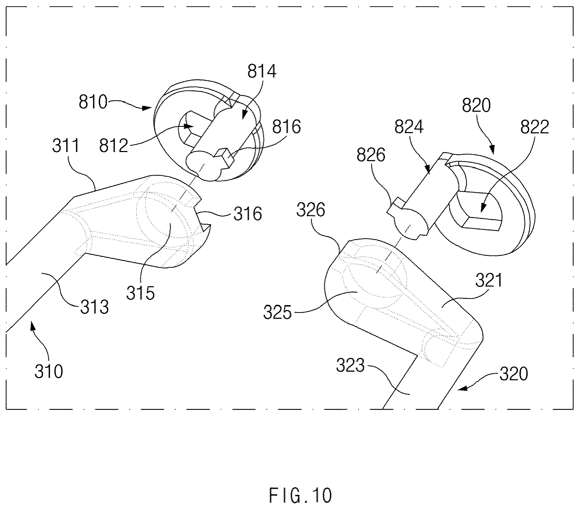

FIG. 10 is a view illustrating a coupling relationship between a connection member and a guide member according to an example.

Referring to FIGS. 3 to 10, according to an example, when the electronic device 200 is assembled, the first connection member 810 is coupled to the first guide member 310, and the second connection member 820 is coupled to the second guide member 320.

According to an example, the first guide member 310 is coupled to the first connection member 810 through fitting, and thus, incorrect assembling of the first guide member 310 may be prevented. The first connection rib 816 of the first connection member 810 is inserted in alignment with the first rib opening 316 of the first guide member 310. The first connection rib 816 of the first connection member 810 is inserted into the first rib opening 316 of the first guide member 310, and at least a portion of the first connection guide pin 814 of the first connection member 810 is inserted into the first pin opening 315 of the first guide member 310.

According to an example, the second guide member 320 is coupled to the second connection member 820 through fitting, incorrect assembling of the second guide member 320 may be prevented. The second connection rib 826 of the second connection member 820 is inserted in alignment with the second rib opening 326 of the second guide member 320. The second connection rib 826 of the second connection member 820 is inserted into the second rib opening 326 of the second guide member 320, and at least a portion of the second connection guide pin 824 of the second connection member 820 is inserted into the second pin opening 325 of the second guide member 320.

According to an example, the first guide member 310 is coupled to the first connection member 810 through an adhesive (not illustrated), and the second guide member 320 is coupled to the second connection member 820 through an adhesive (not illustrated). The guide members 310 and 320 are attached to the connection members 810 and 820 through an adhesive, and thus, a high reliability may be secured by removing a vibration phenomenon due to an assembly tolerance or a clearance.

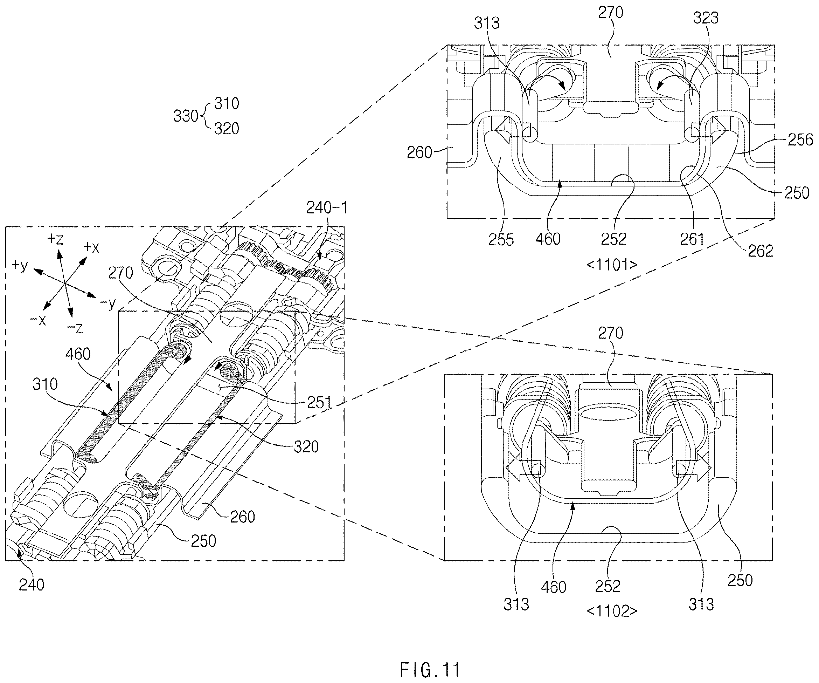

FIG. 11 is a view for explaining an unfolded state and a folded state of an electronic device according to an example. In FIG. 11, <1101> is a view illustrating an unfolded state of an electronic device, and <1102> is a view illustrating a folded state of an electronic device.

Referring to FIGS. 3 to 11, according to an example, the flexible area 460 of the FPCB 260 may be moved along the guide member 330 during the unfolding or folding operation of the foldable electronic device 200. The flexible area 460 of the FPCB 260 is disposed between the guide member 330 and the hinge housing 250. A portion of the FPCB 260 is disposed between each of the first and second side walls 255 and 256 that are parallel to the center bar 270 (or the folding shaft), among the plurality of side walls of the hinge housing 250, and the guide member 330. A portion of the flexible area 460 of the FPCB 260 is disposed between the first side wall 255 and the first guide member 310, and another portion of the flexible area 460 of the FPCB 260 is disposed between the second side wall 256 and the second guide member 320.

The first guide member 310 may face a portion of the first flexible surface 261 of the flexible area 460 of the FPCB 260 in the first direction (e.g., the +y-axis direction). The first guide member 310 that faces a portion of the first flexible surface 261 may limit the rapid movement of the flexible area 460 of the FPCB 260 in a second direction (e.g., the -y-axis direction) that is an opposite direction to the first direction. The first guide member 310 may prevent or reduce the FPCB 260 from being moved in the second direction (e.g., the -y-axis direction) during the folding operation of the electronic device 200. The second guide member 320 may face another portion of the first flexible surface 261 of the flexible area 460 of the FPCB 260 in the second direction (e.g., the -y-axis direction). The second guide member 320 that faces another portion of the first flexible surface 261 may limit the rapid movement of the flexible area 460 of the FPCB 260 in a first direction (e.g., the +y-axis direction) that is an opposite direction to the second direction. The second guide member 310 may prevent or reduce the FPCB 260 from being moved to be biased in the first direction (e.g., the +y-axis direction) during the folding operation of the electronic device 200.

During the unfolding operation of the electronic device 200 according to an example, the first guide member 310 and the second guide member 320 may be rotated in correspondence to the rotations of the first connection member 810 and the second connection member 820 included in the hinge device 240 and 240-1. As an example, the first guide member 310 may be rotated clockwise in correspondence to the first connection member 810 that is rotated clockwise. The second guide member 320 may be rotated counterclockwise in correspondence to the second connection member 820 that is rotated counterclockwise. According to the unfolding operation of the electronic device 200, the first guide bar 313 of the first guide member 310 and the second guide bar 323 of the second guide member 320 may be rotated from an upper side to a lower side. During the unfolding operation of the electronic device, the flexible area 460 of the FPCB 260 may be moved along the first guide member 310 and the second guide member 320. The flexible area 460 of the FPCB 260 may be moved downward (e.g., in the -z-axis direction) toward the hinge housing 250 in the area between each of the first guide member 310 and the second guide member 320 and the hinge housing 250. A portion of the flexible area 460 of the FPCB 260 that is moved downward may be folded.

According to an example, in the unfolded state of the electronic device 200, at least a portion of the flexible area 460 of the FPCB 260 is disposed closer to a bottom surface 252 of the hinge housing 250 than to the center bar 270. In the unfolded state of the electronic device 200, at least a portion of the flexible area 460 of the FPCB 260 is disposed to contact or be adjacent to the bottom surface 252 of the hinge housing 250. In the unfolded state of the electronic device 200, a portion of the first flexible surface 261 (e.g., a surface that faces the +z axis) of the flexible area 460 of the FPCB 260 contacts or be adjacent to the first guide bar 313 and the second guide bar 323. In the unfolded state of the electronic device 200, a portion of the second flexible surface 261 (e.g., a surface that faces the +z axis) of the flexible area 460 of the FPCB 260 contacts or is adjacent to the bottom surface 252 of the hinge housing 250.

During the folding operation of the electronic device according to an example, the first guide member 310 and the second guide member 320 may be rotated in correspondence to the rotations of the first connection member 810 and the second connection member 820 included in the hinge device 240 and 240-1. As an example, the first guide member 310 may be rotated counterclockwise in correspondence to the first connection member 810 that is rotated counterclockwise. The second guide member 320 may be rotated clockwise in correspondence to the second connection member 820 that is rotated clockwise. According to the folding operation of the electronic device, the first guide bar 313 of the first guide member 310 and the second guide bar 323 of the second guide member 320 may be rotated from a lower side to an upper side. During the folding operation of the electronic device, the flexible area 460 of the FPCB 260 may be moved along the first guide member 310 and the second guide member 320. According to an example, he flexible area 460 of the FPCB 260 may be moved upward (e.g., in the +z-axis direction) toward the center bar 270 in the area between each of the first guide member 310 and the second guide member 320 and the hinge housing 250. A portion of the flexible area 460 of the FPCB 260 that is moved upward may be unfolded. According to an example, in the folded state of the electronic device, at least a portion of the flexible area 460 of the FPCB 260 is disposed closer to the center bar 270 than to the bottom surface 252 of the hinge housing 250. In the folded state of the electronic device 200, a portion of the first flexible surface 261 (e.g., a surface that faces the +z axis) of the flexible area 460 of the FPCB 260 contacts or is adjacent to the first guide bar 313 and the second guide bar 323. In the unfolded state of the electronic device 200, a portion of the second flexible surface 261 (e.g., a surface that faces the +z axis) of the flexible area 460 of the FPCB 260 is disposed to be spaced apart from the bottom surface 252 of the hinge housing 250.

According to an example, in the unfolded state and/or the folded state of the electronic device, the first connection member 810 is disposed to be symmetrical to the second connection member 820 with respect to the center bar 270, and the first guide member 310 is disposed to be symmetrical to the second guide member 320 with respect to the center bar 270.

According to an example, in the unfolded state and/or the folded state of the electronic device, the movement of the FPCB 260 in the leftward/rightward direction (e.g., the y-axis direction) is limited to a specific range by the guide member 330. The electronic device according to an example may prevent an abnormal behavior of the FPCB 260, and thus, cracks and damage of the FPCB 260 may be prevented.

FIG. 12 is an exploded perspective view illustrating a hinge device included in an electronic device according to an example.

Referring to FIGS. 3 to 12, at least any one of the plurality of hinge devices 240-1 according to an example may include a fixing bracket 1230 (or a central bracket), a first rotary member 1210 (or a first rotation structure or a first rotary body), a second rotary member 1220 (or a second rotation structure or a second rotary body), a first link member 1310 (or a first slide link, a first rotation support structure, or a first arm member), a second link member 1320 (or a second slide link, a second rotation support structure, or a first rotation link member), a third link member 1330 (or a third slide link, a third rotation support structure, or a second arm member), a fourth link member 1320 (or a fourth slide link, a fourth rotation support structure, or a second rotation link member), a first arm member 1410 (or a first arm structure or a first arm), a second arm member 1420 (or a second arm structure or a second arm), a first support member 1510 (or a first support or a first gap support structure), and a second support member 1520 (or a second support or a second gap support structure).

At least one of the components included in the above-described first hinge device 240 may be omitted. For example, the first rotary member 1210 and the second rotary member 1220 are directly coupled to the housings 210 and 220, and the arm members 1410 and 1420 may be rotated in correspondence to the rotation of the rotary members 1210 and 1220 while being coupled to the rotational members 1210 and 1220.

The first hinge device 240 includes a first shaft 1241 (or a first gear shaft) and a second shaft 1242 (or a second gear shaft), a cam member 1360 (or a cam structure), a first main gear 1431, a second main gear 1432, at least one idle gear 1433 and 1434, a gear bracket (or a gear fixing part) 1260, a shaft bracket 1270 (or a shaft fixing part), a first elastic member 1281, a second elastic member 1282, a first coupling member 1291, and a second coupling member 1292. The gear structures (e.g., the first main gear 1431, the second main gear 1432, the at least one idle gear 1433 and 1434) and a gear bracket 1260, which will be described below, may also be omitted in correspondence to the removal of the interlocking function.

The fixing bracket 1230 includes a first rail 1231 (or a first fixing rail) and a second rail 1232 (or a second fixing rail). Grooves, in which side peripheries (e.g., the -x-axis peripheries) of the first shaft 1241 and the second shaft 1242 are held, and grooves, in which the at least one idle gear 1433 and 1434 is held, are formed on one side (a side wall that faces the +x-axis direction) of the fixing bracket 1230.

At least a portion of the fixing bracket 1230 is seated on and fixed to one side of the hinge housing 250. The fixing bracket 1230 includes a structure (e.g., the first rail 1231 and the second rail 1232), to which a portion (e.g., the first rail structure 1211) of the first rotary member 1210 and a portion (e.g., the third rail structure 1221) of the second rotary member 1220 is fastened to be rotatable.

The first rail 1231 of the fixing bracket 1230 defines an imaginary axis, around which the first rail structure 1211 of the first rotary member 1210 may be rotated in place while being rotated. The first rail 1231 is formed in a structure corresponding to the first rail structure 1211. For example, the first rail 1231 includes two arc-shaped or half-moon-shaped rails. A rotational motion or a curved sliding motion may be performed with respect to a portion of an opposite side of the first rotary member 1210. The second rail 1232 defines an imaginary axis, around which the third rail structure 1221 of the second rotary member 1220 may be rotated in place while being rotated. A rotational motion or a curved sliding motion may be performed with respect to a portion of an opposite side of the second rotary member 1220.

The fixing bracket 1230 is formed of a material (e.g., a metallic material or reinforced plastic of a specific rigidity) having a specific rigidity to support the movements of the first rotary member 1210 and the second rotary member 1220 in a hinge operation process (an operation of changing an angle between the first housing 210 and the second housing 220 to 0 degree to 180 degrees or holding them at a specific angle between 0 degree to 180 degrees). Although it has been described that the fixing bracket 1230 is fixed to the hinge housing 250 in the above description, one shape of the hinge housing 250 may be provided in the shape of the fixing bracket 1230.

The first rotary member 1210 includes a first rotation body 1213, a first rail structure 1211 (or a first rotation rail structure) that is disposed in the x-axis direction of the first rotation body 1213, and a second rail structure (or a second rotation rail structure) that is disposed in the -x-axis direction of the first rotation body 1213. Alternatively, the first rotary member 1210 may include one side (e.g., a portion (e.g., the first rail structure 1211) that is fastened to be hinged after being fastened to the first rail 1231) of the fixing bracket 1230, and one side (e.g., a portion (e.g., the second rail structure 1212) fastened to the fourth rail 1321) of the second link member 1320.

While the second link member 1320 coupled to the first housing 210 is hinged (or rotated counterclockwise or clockwise), the first rail structure 1211 of the first rotary member 1210 fastened to the fixing bracket 1230 may be rotated (e.g., rotated counterclockwise or clockwise) in place. The second rail structure 1212 coupled to the second link member 1320 may be rotated (or slid) in the second link member 1320 (e.g., in the fourth rail 1320) while being moved in one direction (e.g., counterclockwise while the electronic device 200 is folded from the unfolded state or clockwise while the electronic device 200 is unfolded from the folded state).

The first rotation body 1213 includes a structure (e.g., at least one hole that passes vertically) that may be coupled to the first wing plate 381. A portion of the first wing plate 381, among the wing plates 381 and 382, may be fixed to the first rotary member 1210.

The second rotary member 1220 includes a second rotation body 1223, a third rail structure 1221 (or a third rotation rail structure) that is disposed in the -x-axis direction of the second rotation body 1223, and a fourth rail structure 1222 (or a fourth rotation rail structure) that is disposed in the x-axis direction of the second rotation body 1223. Furthermore, the second rotary member 1220 includes an opposite side (e.g., a portion (e.g., the third rail structure 1221) that is coupled to be hinged after being fastened to the second rail 1232) of the fixing bracket 120 and one side (e.g., a portion (e.g., the fourth rotation rail structure 1222) that is coupled to the sixth rail 1341). In the second rotary member 1220, the third rail structure 1221 coupled to the fixing bracket 1230 may be rotated in place while the fourth link member 1340 coupled to the second housing 220 is hinged (rotated clockwise or counterclockwise), and the fourth rotation rail structure 1222 coupled to the fourth link member 1340 may be rotated (slid) in the fourth link member 1340 (e.g., in the sixth rail 1341) while being moved in one direction (e.g., clockwise while the electronic device 200 is folded from the unfolded state or counterclockwise while the electronic device 200 is unfolded from the folded state). The second rotation body 1223 includes a structure (e.g., at least one hole that passes vertically) that may be coupled to the second wing plate 382. A portion of the second wing plate 382, among the wing plates 381 and 382, may be fixed to the second rotary member 1220.

The second rotary member 1220 may be moved in an opposite direction to the first rotary member 1210. For example, while the first rail structure 1211 of the first rotary member 1210 is rotated in place counterclockwise, the third rail structure 1221 of the second rotary member 1220 may be rotated in place clockwise.

While the second rail structure 1212 of the first rotary member 1210 is rotated counterclockwise, the second rail structure 1212 may be slid (relatively slid, and thus, the fourth rail 1321 of the second link member 1320 is slid clockwise with respect to the second rail structure 1212) counterclockwise in the fourth rail 1321 (or the second link rail or the first rotation rail) of the second link member 1320. While the second rail structure 1212 is slid while being rotated, the fourth rotation rail structure 1222 of the second rotary member 1220 may be slid (relatively slid, and thus, the sixth rail 1341 of the fourth link member 1340 is slid clockwise with respect to the fourth rotation rail structure 1222) counterclockwise in the sixth rail 1341 of the fourth link member 340 while being rotated counterclockwise.

The first link member 1310 fixes the first arm member 1410 to the first housing 210 and support the rotation (or sliding) of the first arm member 1410. The first link member 1310 includes a structure, on which a portion of the first arm member 1410 is seated. A third rail 1311 (or a first arm rail or a first link rail) is formed in the first link member 1310. The third rail 1311 is fastened to the fifth rail structure 1411 (or the first arm rail structure) of the first arm member 1410. The fifth rail structure 1411 of the first arm member 1410 is seated on the third rail 1311 to guide the rotation or sliding of the fifth rail structure 1411.

The second link member 1320 fixes the first rotary member 1210 to the first housing 210 and supports the rotation (or sliding) of the first rotary member 1210. The second link member 1320 includes a structure, on which a portion of the first rotary member 1210 is seated. A fourth rail 1321 is formed in the second link member 1320. The fourth rail 1321 is fastened to the second rail structure 1212 of the first rotary member 1210. The second rail structure 1212 of the first rotary member 1210 is seated on the fourth rail 1321 to guide the rotation or sliding of the second rail structure 1212.

The third link member 1330 fixes the second arm member 1420 to the second housing 220 and supports the rotation (or sliding) of the second arm member 1420. The third link member 1310 includes a structure, on which a portion of the second arm member 1420 is seated. A fifth rail 1331 (or a third link rail or a second arm rail) is formed in the third link member 1330. The fifth rail 1331 is fastened to a sixth rail structure 1421 (or the second arm rail structure) of the second arm member 1420. The sixth rail structure 1421 of the second arm member 1420 is seated on the fifth rail 1331 to guide the rotation or sliding of the sixth rail structure 1421.

The fourth link member 1340 fixes the second rotary member 1220 to the second housing 220 and support the rotation (or sliding) of the second rotary member 1220. The fourth link member 1340 includes a structure, on which a portion of the second rotary member 1220 is seated. The fourth link member 1340 is formed with a sixth rail 1341 (or a fourth link rail or a second rotation rail) that is fastened to the fourth rail structure 1222 of the second rotary member 1220.

The first arm member 1410 includes a structure (e.g., a fifth rail structure 1411 or a first arm rail structure) that is fastened to the first link member 1310 coupled to the first housing 210. The fifth rail structure 1411 may be slid counterclockwise and clockwise in the third rail 1311 formed in the first link member 1310. The first arm member 1410 includes a first shaft holding part 1412 that is fastened to the first shaft 1241. A first main gear 1431 is disposed on one side of the first shaft holding part 1412. A hole that passes in the +x-axis or -x-axis direction is formed in the first shaft holding part 1412 so that the first shaft 1241 is held therein. The first shaft holding part 1412 includes a first cam structure 1414 that is engaged with the cam member 1360. The first cam structure 1414 is disposed on a side wall of the first shaft holding part 1412 in the +x-axis direction. The first arm member 1410 may be rotated counterclockwise and clockwise with respect to an actual axis by the first shaft 1241.

The second arm member 1420 includes a structure (e.g., the sixth rail structure 1421) that is fastened to the third link member 1330 coupled to the second housing 220. The sixth rail structure 1421 may be slid counterclockwise and clockwise in the fifth rail 1331 formed in the third link member 1330. The second arm member 1420 includes a second shaft holding part 1422 that is fastened to the second shaft 1242. The second main gear 1432 is disposed on one side of the second shaft holding part 1422. A hole that passes in the +x-axis or -x-axis direction is formed in the second shaft holding part 1422 so that the second shaft 1242 is held therein. The second shaft holding part 1422 includes a second cam structure 1424 that is engaged with the cam member 1360. The second cam structure 1424 is disposed on a side wall of the second shaft holding part 1422 in the +x-axis direction. The second arm member 1420 may be rotated clockwise and counterclockwise with respect to an actual axis by the second shaft 1242.

The cam member 1360 includes a first cam 1361 that is engaged with the first cam structure 1414 of the first arm member 1410 and a second cam 1362 that is engaged with the second cam structure 1424 of the second arm member 1420. A through hole, through which the first shaft 1241 may pass, is formed at the center of the first cam 1361, and a through hole, through which the second shaft 1242 may pass, is formed at the center of the second cam 1362. A first elastic member 1281 and a second elastic member 1282 are disposed between the cam member 1360 and the shaft bracket 1270 to provide an elastic force for pushing the cam member 1360 toward the first cam structure 1414 and the second cam structure 1424.

The shaft bracket 1270 includes a fixing structure 273 (e.g., a through hole in the z-axis direction) that may fix the first hinge device 240 to the hinge housing 250. Furthermore, the shaft bracket 1270 includes shaft holding holes 1271 and 1272, into which the first shaft 1241 and the second shaft 1242 disposed in the y-axis direction may be inserted. Sizes of the shaft holding holes 1271 and 1272 of the shaft bracket 1270 are greater than those of the first shaft 1241 and the second shaft 1242. The first shaft 1241 may be inserted into and held in the first shaft holding hole 1271, and the second shaft 1242 may be inserted into and held in the second shaft holding hole 1272.

The gear bracket 1260 is disposed between the cam member 1360 and at least one idle gear 1433 and 1434. The gear bracket 1260, for example, includes holes, through which the first shaft 1241 and the second shaft 1242 pass to be held, and holding holes, in which one side of at least one idle gear 1433 and 1434 is held.

The first main gear 1431 is disposed on one side of the first shaft holding part 1412 of the first arm member 1410 in a gear pattern. The first main gear 1431 is gear-coupled to the first idle gear 1433. The second main gear 1432 is disposed on one side of the second shaft holding part 1422 of the second arm member 1420 in a gear pattern. The second main gear 1432 is gear-coupled to the second idle gear 1434. The first idle gear 1433 and the second idle gear 1434 are be gear-coupled to each other. As the first main gear 1431, the first idle gear 1433, the second idle gear 1434, and the second main gear 1432 described above are gear-connected to each other, the first arm member 1410 and the second arm member 1420 are interlocked with each other.

A plurality of coupling members 1291 and 1292 include a first coupling member 1291 and a second coupling member 1292. The first coupling member 1291 =fixes one side of the first shaft 1241 that is disposed to protrude in the -y-axis direction through the first shaft holding hole 1271. The second coupling member 1292 fixes one side of the second shaft 1242 that protrudes in the -y-axis direction through the second shaft holding hole 1272. The at least one coupling member 291 and 292 described above, for example, may include a form of an E-ring.

A plurality of connection members 810 and 820 (or center bar guides, lift members) are disposed between each of the plurality of coupling members 1291 and 1292, and the shaft bracket 1270. The plurality of connection members 810 and 820 include a first connection member 810 in a form of a washer ring and a second connection member 820 in a form of a washer ring. The first connection member 810 includes a first connection guide pin 814 that protrudes in the x-axis direction. The first connection guide pin 814 may be used as a guide member when the center bar 270 and the first hinge device 240 are assembled, and may be used as a guide member when the first guide member 310 and the first hinge device 240 are assembled. The second connection member 820 includes a second connection guide pin 824 that protrudes in the same direction as the first connection guide pin 814. The second connection guide pin 824 may be used as a guide member when the center bar 270 and the hinge device 240 and 240-1 are assembled, and may be used as a guide member when the second guide member 320 and the hinge device 240 and 240-1 are assembled.

The plurality of coupling members 1291 and 1292 include a first coupling member 1291 that may prevent separation of the first connection member 810 and a second coupling member 1292 that may prevent separation of the second connection member 820. The first coupling member 1291 fixes one side of the first shaft 1241 that is disposed to protrude in the -y-axis direction through the first shaft holding hole 1271. The second coupling member 1292 fixes one side of the second shaft 1242 that protrudes in the -y-axis direction through the second shaft holding hole 1272. The at least one coupling member 291 and 292 described above, for example, may include a form of an E-ring.

According to an example, the plurality of connection members 810 and 820 and the plurality of coupling members 1291 and 1292 are integrally formed. The first connection member 810 integrally formed with the first coupling member 1291 includes a first connection guide pin 814 for coupling to the center bar 270 and the first guide member 310. The first connection member 810 integrally formed with the first coupling member 1291 is coupled to the first shaft 1241 to be rotated in correspondence to the rotation of the first shaft 1241.

The second connection member 820 integrally formed with the second coupling member 1292 includes a second connection guide pin 824 for coupling to the center bar 270 and the second guide member 320. The second connection member 820 integrally formed with the second coupling member 1292 is coupled to the second shaft 1242 to be rotated in correspondence to the rotation of the second shaft 1242.

The plurality of support members include a first support member 1510 and a second support member 1520.

The first support member 1510 is disposed to contact an opposite surface of the fifth rail structure 1411 between one surface (e.g., a surface that faces the z axis) of the first housing 210 and an opposite surface (e.g., a surface that faces the -z axis) of the fifth rail structure 1411. The first support member 1510 is formed to apply a force in a first direction to an opposite surface of the fifth rail structure 1411. For example, at least a portion of the first support member 1510 is elastically pressed while contacting the fifth rail structure 1411 and is maintained in contact with the fifth rail structure 1411 by using its elastic force (repulsive force).

The second support member 1520 is disposed to contact an opposite surface of the sixth rail structure 1421 between one surface of the second housing 220 and an opposite surface of the sixth rail structure 1421. The second support member 1520 is formed to apply a force in a third direction to the opposite surface of the sixth rail structure 1421. For example, at least a portion of the second support member 1520 is elastically pressed while contacting the sixth rail structure 1421 and is maintained in contact with the sixth rail structure 1421 by using its elastic force (repulsive force).

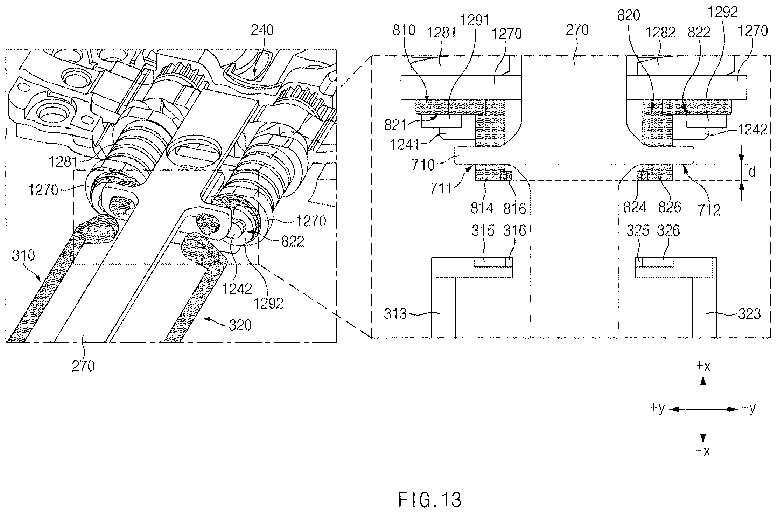

FIG. 13 is a view illustrating a state, in which a hinge device and a guide member included in an electronic device are separated from each other, according to an example.

Referring to FIGS. 3 to 13, according to an example, when the foldable electronic device 200 is assembled, the first shaft 1241 is disposed to pass via the first connection opening 812 of the first connection member 810 and the first coupling member 1291. The first connection member 810 and the first coupling member 1291 fix one side of the first shaft 1241.

According to an example, the first connection member 810 that fixes one side of the first shaft 1241 includes a first connection guide pin 814 and/or a first connection rib 816 that protrude toward the first holder part 710 of the center bar 270. The first connection guide pin 814 and the first connection rib 816 of the first connection member 810 are inserted into the first holding hole 711 of the first holder part 710 of the center bar 270 to be held on the first holder part 710. At least any one of the first connection guide pin 814 and the first connection rib 816 of the first connection member 810 may protrude toward the first guide member 310 via the first holding hole 711 of the first holder part 710. The first connection guide pin 814 of the first connection member 810 may protrude by a specific length "d" further than the first holder part 710 of the center bar 270. The first connection member 810 is inserted into the first pin opening 315 of the first guide member 310, and the first connection rib 816 is inserted into the first rib opening 316 of the first guide member 310 so that the first connection member 810 is coupled to the first guide member 310.

According to an example, the first connection member 810 is assembled with the first shaft 1241 to be rotated along the rotation axis of the first shaft 1241, and the first guide member 310 is coupled to the first connection member 810 that is rotated together with the first shaft 1241 along the rotation axis of the first shaft 1241. The first guide member 310 is rotated together with the first connection member 810 along the rotation axis of the first connection guide pin 814 of the first connection member 810.

According to an example, when the foldable electronic device is assembled, the second shaft 1242 is disposed to pass via the second connection opening 822 of the second connection member 820 and the second coupling member 1292. The second connection member 820 and the second coupling member 1292 fix one side of the second shaft 1242.

According to an example, the second connection member 820 that fixes one side of the second shaft 1242 includes a second connection guide pin 824 and/or a second connection rib 826 that protrude toward the first holder part 710 of the center bar 270. The second connection guide pin 824 and the second connection rib 826 of the second connection member 820 are inserted into the second holding hole 712 of the first holder part 710 of the center bar 270 to be held on the first holder part 710. At least any one of the second connection guide pin 824 and the second connection rib 826 of the second connection member 820 may protrude toward the second guide member 320 via the second holding hole 712 of the first holder part 710. The second connection guide pin 824 of the second connection member 820 may protrude by a specific length "d" further than the first holder part 710 of the center bar 270. The second connection guide pin 824 of the second connection member 820 is inserted into the second pin opening 325 of the second guide member 320, and the second connection rib 826 is inserted into the second rib opening 326 of the second guide member 320, so that the second connection member 820 is coupled to the second guide member 320.

According to an example, the second connection member 820 is assembled with the second shaft 1242 to be rotate along the rotation axis of the second shaft 1242. The second guide member 320 is coupled to the second connection member 820 that is rotated together with the second shaft 1242 along the rotation axis of the second shaft 1242. The second guide member 320 is rotated together with the second connection member 820 along the rotation axis of the second connection guide pin 824 of the second connection member 820.

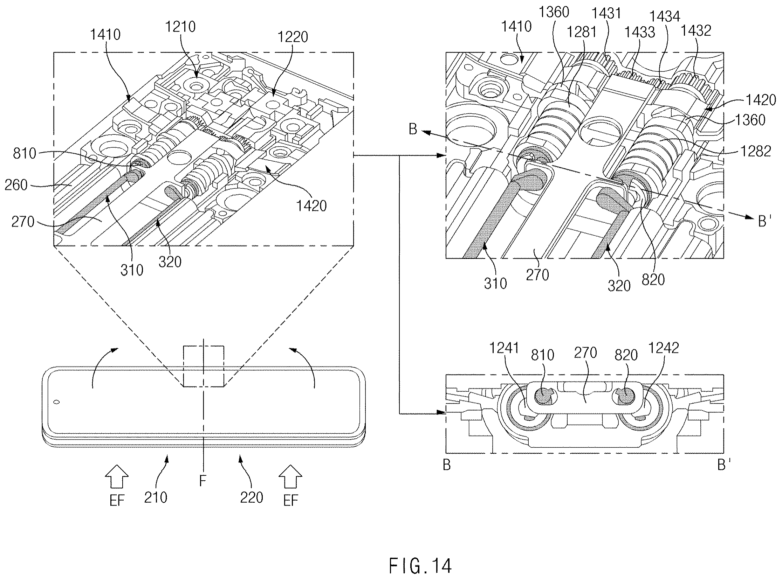

FIG. 14 is a view illustrating a behavior of a hinge device of an electronic device according to an example.

Referring to FIGS. 3 to 14, according to an example, a state of the electronic device 200 may be switched by a manipulation or an external force EF by the user. The external force EF of the user is transmitted to the first rotary member 1210, the second rotary member 1220, the first arm member 1410, and the second arm member 1420 through the first housing 210 and the second housing 220. The first rotary member 1210, the second rotary member 1220, the first arm member 1410, and the second arm member 1420 are rotated by the transmitted external force. The gear assemblies 1431, 1432, 1433, and 1434, the first shaft 1241, and the second shaft 1242 are rotated in conjunction with the first rotary member 1210, the second rotary member 1220, the first arm member 1410, and the second arm member 1420. As the first connection member 810 coupled to the rotating first shaft 1241 and the second connection member 820 coupled to the second shaft 1242 are rotated, the center bar 270 is linearly moved.

According to an example, when an external force by the user is applied to the electronic device when the electronic device is in the unfolded state, a folding operation (or an unfolding operation) of the first housing 210 and the second housing 220 starts. The external force EF of the user is transmitted to the first rotary member 1210, the second rotary member 1220, the first arm member 1410, and the second arm member 1420 through the first housing 210 and the second housing 220. The first rotary member 1210 and the first arm member 1410 are rotated clockwise, and the second rotary member 1220 and the second arm member 1420 is rotated counterclockwise, by the transmitted external force. Some of the gear assemblies 1431, 1432, 1433, and 1434 and the first shaft 1241 are rotated clockwise in conjunction with the first rotary member 1210 and the first arm member 1410 that are rotated clockwise. The remaining ones of the gear assemblies 1431, 1432, 1433, and 1434 and the second shaft 1242 are rotated counterclockwise in conjunction with the second rotary member 1220 and the second arm member 1420. As the first connection member 810 coupled to the first shaft 1241 that is rotated clockwise is rotated clockwise, and the second connection member 820 coupled to the second shaft 1242 that is rotated counterclockwise is rotated counterclockwise, the center bar 270 is lowered toward the FPCB 260. At the same time, a portion of the first guide member 310 coupled to the first connection member 810 that is rotated clockwise is rotated clockwise while contacting the flexible area 460 of the FPCB 260, and a portion of the second guide member 320 coupled to the second connection member 820 that is rotated counterclockwise are rotated counterclockwise while contacting the flexible area 460 of the FPCB 260. During the folding operation of the electronic device, the first guide member 310 and the second guide member 320 guide the movement of the FPCB 260.

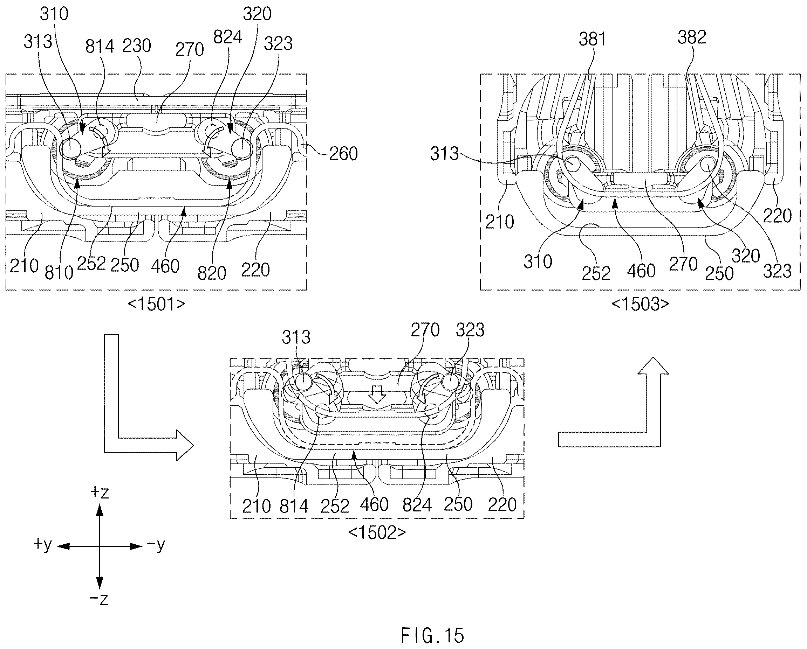

FIG. 15 is a view illustrating a behavior of a guide bracket of an electronic device according to an example. In FIG. 15, <1501> is a view illustrating the unfolded state of the electronic device, <1502> is a view illustrating the operation of the guide member when the electronic device is switched from the unfolded state to the folded state, and <1503> is a view illustrating the folded state of the electronic device.

Referring to FIGS. 3 to 15, when the electronic device is in the unfolded state, the center bar 270 is raised upward (e.g., toward the +z axis or toward the display 240) so that the center bar 270 is spaced apart from the hinge housing 250 by a specific distance. The connection guide pin 814 and 824 of the connection members 810 and 820 coupled to the raised center bar 270 are moved upward. The guide bars 313 and 323 of the guide members 310 and 320 coupled to the connection guide pins 814 and 824 are moved downward. The flexible area 460 of the FPCB 260 is moved downward along the guide bars 313 and 323. At least a portion of the flexible area 460 of the FPCB 260 is disposed to contact or be adjacent to the bottom surface 252 of the hinge housing 250.

The electronic device may be switched from an intermediate state or an unfolded state to a folded state by a manipulation or an external force EF by the user. The connection members 810 and 820 and the guide members 310 and 320 are rotated in correspondence to the shafts 1241 and 1242 that are rotated by the manipulation or the external force EF by the user. With the rotation of the connection members 810 and 820, the center bar 270 is lowered downward (e.g., toward the -z axis or toward the hinge housing 250).

According to an example, the first connection member 810 and the first guide member 310 are rotated in a first rotation direction (e.g., clockwise) in correspondence to the rotation of the first shaft 1241, and the second connection member 820 and the second guide member 320 are rotated in a second rotation direction (e.g., counterclockwise) that are opposite to the first rotation direction in correspondence to the rotation of the second shaft 1242. The first connection guide pin 814 of the first connection member 810 is rotated in the first rotation direction around the first shaft 1241. The first connection guide pin 814 is moved from an upper side to a lower side along the first rotation direction. The first guide bar 313 of the first guide member 310 is rotated in the first rotation direction around the first connection guide pin 814. The first guide bar 313 is moved from a lower side to an upper side along the first rotation direction. The second connection guide pin 824 of the second connection member 820 is rotated in the second rotation direction around the second shaft 1242. The second connection guide pin 824 is moved from an upper side to a lower side along the second rotation direction. The second guide bar 323 of the second guide member 320 is rotated in the second rotation direction around the second connection guide pin 824. The second guide bar 323 is moved from a lower side to an upper side in the second rotation direction. The flexible area 460 of the FPCB 260 is moved upward along the first guide bar 313 and the second guide bar 323 that are moved upward. In the folded state of the electronic device, the flexible area 460 of the FPCB 260 is spaced apart from the bottom surface 252 of the hinge housing 250 at a specific interval. In the folded state of the electronic device, at least a portion of the flexible area 460 of the FPCB 260 is disposed closer to the center bar 270 than to the bottom surface 252 of the hinge housing 250.

According to an example, in the unfolded state of the electronic device, the first connection guide pin 814 and the second connection guide pin 824 are located on an upper side of the first guide bar 313 and the second guide bar 323. In the folded state of the electronic device, the first guide bar 313 and the second guide bar 323 may be located on an upper side of the first connection guide pin 814 and the second connection guide pin 824.

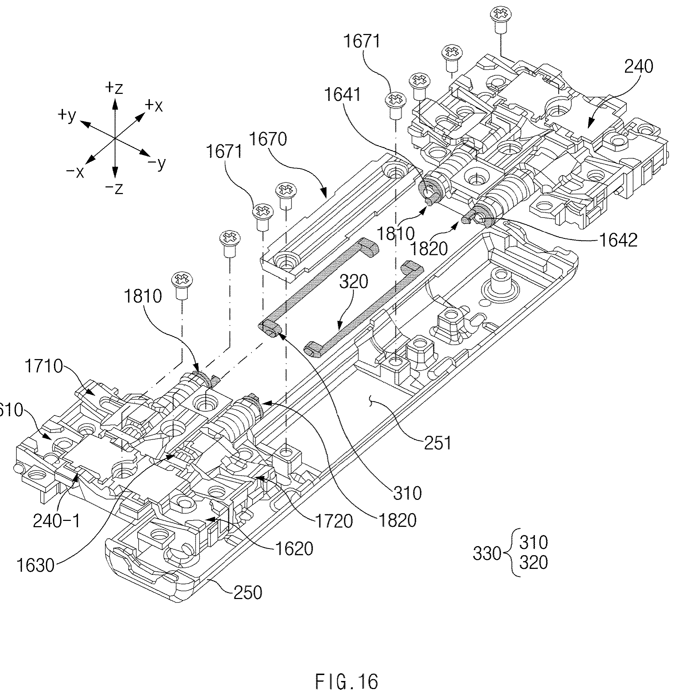

FIG. 16 is a perspective view illustrating a portion of an electronic device according to an example.

Referring to FIGS. 3 and 16, an electronic device (e.g., the electronic device 100 of FIG. 1 or the electronic device 200 of FIGS. 2A and 2B) according to an example includes a plurality of hinge devices 240 and 240-1 that connect the first housing 210 and the second housing 220 under the display 230 (e.g., the -z-axis direction). For example, the plurality of hinge device 240 and 240-1 include a first hinge device 240, and a second hinge device 240-1 that is spaced apart from the first hinge device 240 along a direction that is parallel to the folding axis (or the center bar 1670). The plurality of hinge devices 240 and 240-1 are disposed between the first housing 210 and the second housing 220 not to be viewed from the outside through the hinge housing 250 (e.g., the hinge cover). At least a portion of a plurality of hinge devices 240 and 240-1 are accommodated in an interior space 251 of the hinge housing 250.

According to an example, at least any one of the plurality of hinge devices 240 and 240-1 include a first rotary member 1610 that is coupled to the first housing 210, a second rotary member 1620 that is coupled to the second housing 220, a first arm member 1710 that is rotated in correspondence to rotation of the first rotary member 1610, a second arm member 1720 that is rotated in correspondence to rotation of the second rotary member 1620, a first shaft 1641 that is disposed along a rotation axis of the first arm member 1710, a second shaft 1642 that is disposed along a rotation axis of the second arm member 1720, and a gear assembly 1630 that allows the first housing 210 and the second housing to be rotated symmetrically to each other.

According to an example, at least any one of the plurality of hinge devices 240 and 240-1 include a plurality of coupling members 1810 and 1820 that fix sides of the shafts 1641 and 1642. The plurality of coupling members 1810 and 1820 include a first coupling member 1810 that fixes one side of the first shaft 1641 of each of the plurality of hinge devices 240 and 240-1, and a second coupling member 1820 that fixes one side of the second shaft 1642 of each of the plurality of hinge devices 240 and 240-1. For example, at least any one of the plurality of coupling members 1810 and 1820 may include an E-ring form.

The electronic device 200 according to an example includes a center bar 1670 that is disposed to face a partial area of the display 230. The center bar 1670 at least partially overlaps a third area (e.g., the third area 230c of FIG. 2A) of the display. At least a portion of the center bar 1670 is disposed between the first hinge device 240 and the second hinge device 240-1. The center bar 1670 supports the third area of the display 230, which is not supported by at least any one of the plurality of hinge devices 240 and 240-1 when the electronic device is in the unfolded state. In each of the unfolded state, the folded state, and the intermediate state of the electronic device, the center bar 1670 is fixed at the same position without being changed in position. The center bar 1670 is fixed to the hinge housing 250 through a fastening member (e.g., a screw). In each of the unfolded state, the folded state, and the intermediate state of the electronic device, the center bar 1670 is a central portion of the electronic device.

The electronic device according to an example includes a guide member 330 that is disposed between the plurality of hinge devices. The guide member 330 guides the shaping (or shape) of the FPCB 260 when the FPCB 260 is unfolded or folded according to the unfolding or folding operation of the foldable electronic device 200. The guide member 330 prevents the FPCB 260 from being abnormally shaped (e.g., shaped to be biased to one side or shaped asymmetrically) while being rotated according to the unfolding or folding operation of the foldable electronic device 200. As an example, the guide member 330 includes a first guide member 310 and/or a second guide member 320. The first guide member 310 is disposed to be symmetrical to the second guide member 320 with the center bar 1670 interposed therebetween. The first guide member 310 guides the shape of the FPCB 260 while being rotated in correspondence to the rotation of the first shaft 1641. The second guide member 320 guides the shape of the FPCB 260 while being rotated in correspondence to the rotation of the second shaft 1642. Each of the first guide member 310 and the second guide member 320 contact or are adjacent to one surface of the FPCB, which faces the display. Each of the first guide member 310 and the second guide member 320 may control or limit the movement range of the FPCB 260 within a specific range.

According to an example, at least some of a plurality of hinge devices 240 and 240-1 have similar structures and shapes. For example, the second hinge device 240-1 is substantially symmetrical to or has substantially the same configuration as the first hinge device 240.

FIG. 16 illustrates a structure, in which two similar or the same hinge devices 240 and 240-1 are disposed in the hinge housing 250, for example, but the disclosure is not limited thereto, and other types of hinge devices may be mounted on the hinge housing 250. Some of the at least one hinge device 240 and 240-1 may perform a hinge operation while being connected to each other through the guide member 330.

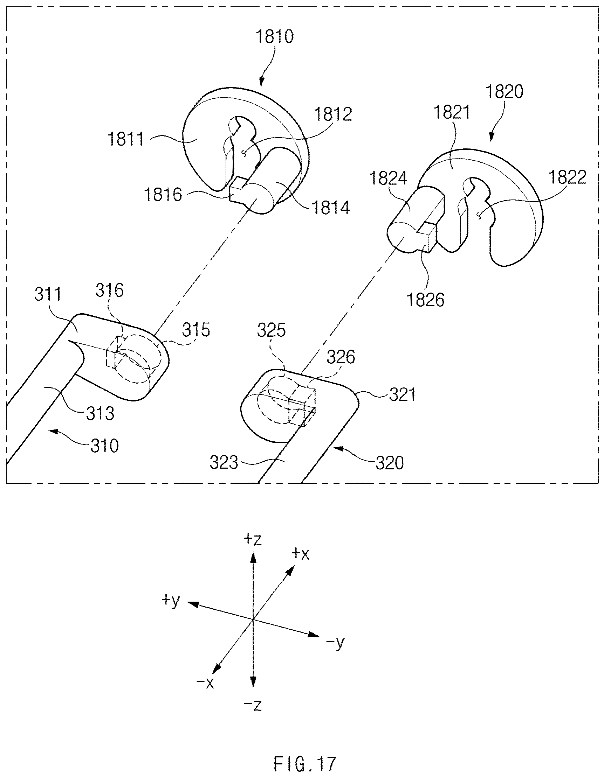

FIG. 17 is a view illustrating a state, in which a coupling member and a guide member are separated from each other, according to an example. In FIG. 17, the first coupling member 1810 may be mainly described, and the description thereof may be applied to the description of the second coupling member that is entirely or partially the same as the configuration of the first coupling member 1810. For example, the description of the first coupling base 1811, the first coupling opening 1812, the first coupling guide pin 1814 (or the third guide pin 1814), and the first coupling rib 1816 included in the first coupling member 1810 may be applied to the description of the second coupling base 1821, the second coupling guide pin 1822, the second coupling guide pin 1824 (or the fourth guide pin 1824), and the second coupling rib 1826 included in the second coupling member 1820. Because the configurations of the guide members 310 and 320 of FIGS. 16 and 17 are entirely or partially the same as the configurations of the guide members 310 and 320 of FIGS. 3 to 15, the description of the guide members 310 and 320 of FIGS. 3 to 15 may be applied to the description of the guide members 310 and 320 of FIGS. 16 and 17.

Referring to FIGS. 16 and 17, according to an example, when the electronic device is assembled, the first coupling member 1810 is coupled to the first guide member 310, and the second coupling member 1820 is coupled to the second guide member 320.

According to an example, the first coupling member 1810 includes a first coupling base 1811 including a first coupling opening 1812. The first coupling opening 1812 is formed to have a shape of a hole, a portion of a side wall of the first coupling base 1811 that is perpendicular to a thickness direction of the first coupling base 1811 is opened while passing through a portion of the first coupling base 1811 in a thickness direction (e.g., the x-axis direction) of the first coupling base 1811. According to an example, the first shaft 1641 of the hinge device 1240 and 1240-1 are inserted into the first coupling opening 1812, and the second shaft 1642 of the hinge device 240 and 240-1 is inserted into the second coupling opening 1822.

According to an example, the first coupling member 1810 includes a first coupling guide pin 1814 that protrudes from a portion of the first coupling base 1811 in a thickness direction (e.g., the x-axis direction) (or a depth direction of the first coupling opening 1812) of the first coupling base 1811. For example, a protrusion length (e.g., a length in the x-axis direction) of the first coupling guide pin 1814 is formed to be greater than a depth of the first coupling opening 1812.

According to an example, the first coupling member 1810 includes a first coupling rib 1816 that protrudes from the first coupling guide pin 1814. The protrusion direction of the first coupling rib 1816 and the protrusion direction of the first coupling guide pin 1814 is different. As an example, the protrusion direction of the first coupling rib 1816 is perpendicular to the protrusion direction of the first coupling guide pin 1814.

According to an example, the first guide member 310 is coupled to the first coupling member 1810 through fitting, and thus, incorrect assembling of the first guide member 310 may be prevented. The first coupling rib 1816 of the first coupling member 1810 is inserted in alignment with the first rib opening 316 of the first guide member 310. The first coupling rib 1816 of the first coupling member 1810 is inserted into the first rib opening 316 of the first guide member 310, and at least a portion of the first coupling guide pin 1814 of the first coupling member 1810 is inserted into the first pin opening 315 of the first guide member 310.

According to an example, the second guide member 320 is coupled to the second coupling member 1820 through fitting, incorrect assembling of the second guide member 320 may be prevented. The second coupling rib 1826 of the second coupling member 1820 is inserted in alignment with the second rib opening 326 of the second guide member 320. The second coupling rib 1826 of the second coupling member 1820 is inserted into the second rib opening 326 of the second guide member 320, and at least a portion of the second connection guide pin 824 of the second coupling member 1820 is inserted into the second pin opening 325 of the second guide member 320.

According to an example, the first guide member 310 is coupled to the first coupling member 1810 through an adhesive (not illustrated), and the second guide member 320 is coupled to the second coupling member 1820 through an adhesive (not illustrated). The guide members 310 and 320 are attached to the connection members 810 and 820 through an adhesive, and thus, a high reliability may be secured by removing a vibration phenomenon due to an assembly tolerance or a clearance.

According to an example, the first coupling member 1810, into which the first shaft 1641 is inserted, is rotated around the first shaft 1641 in correspondence to the rotation of the first shaft 1641. The first guide bar 313 of the first guide member 310, into which the first coupling guide pin 1814 of the first coupling member 1810 is inserted, is rotated around the first coupling guide pin 1814 in correspondence to the rotation of the first coupling guide pin 1814.

FIG. 18 is a view illustrating an unfolded state and a folded state of an electronic device according to an example. In FIG. 18, <1801> is a view illustrating an unfolded state of an electronic device, and <1802> is a view illustrating a folded state of an electronic device.

Referring to FIG. 18, according to an example, the flexible area 460 of the FPCB 260 is disposed between the guide member 330 and the hinge housing 250. The flexible area 460 of the FPCB 260 is moved along the guide bar 313 and 323 of the guide member 330 during the unfolding or folding operation of the foldable electronic device 200. The first guide member 310 limits the flexible area 460 of the FPCB 260 from being rapidly moved in the first direction (e.g., the -y-axis direction). The first guide member 310 prevents or reduces the FPCB from being moved to be biased in the first direction (e.g., the -y-axis direction) during the folding operation of the electronic device. The second guide member 320 limits the flexible area 460 of the FPCB 260 from being rapidly moved in the second direction (e.g., the +y-axis direction). The second guide member 310 prevents or reduces the possibility of the FPCB 260 from being moved to be biased in the second direction (e.g., the +y-axis direction) during the folding operation of the electronic device.

During a folding operation of an electronic device according to an example, the coupling members 1810 and 1820 and the guide members 310 and 320 are rotated in correspondence to the rotation of the shafts 1641 and 1642 of the hinge devices 240 and 240-1. The center bar 1670 is fixed to the hinge housing 250 regardless of the rotations of the shafts 1641 and 1642 and the coupling members 1810 and 1820. The position of the center bar 1670 is fixed regardless of the change in the folded state or the unfolded state of the electronic device 100.

According to an example, while the electronic device is changed from the unfolded state to the folded state, the first coupling member 1810 and the first guide member 310 are rotated in the first rotation direction (e.g., clockwise) in correspondence to the rotation of the first shaft 1641. The first guide bar 313 of the first guide member 310 are moved upward (e.g., to a side that faces the +z axis) in a direction that becomes closer to the second guide bar 323 along the first rotation direction. The second coupling member 1820 and the second guide member 320 are rotated in the second rotation direction (e.g., counterclockwise) that is opposite to the first rotation direction in correspondence to the rotation of the second shaft 1642. The second guide bar 323 of the second guide member 320 are moved upward in a direction that becomes closer to the first guide bar 313 along the second rotation direction. The flexible area 460 of the FPCB 260 is moved along the first guide bar 313 and the second guide bar 323 that become closer to each other. The flexible area 460 of the FPCB 260 is moved upward toward the center bar 1670 in the area between each of the first guide member 310 and the second guide member 320 and the hinge housing 250. In the folded state of the electronic device, at least a portion of the flexible area 460 of the FPCB 260 is disposed closer to the center bar 270 than to the bottom surface 252 of the hinge housing 250.

According to an example, while the electronic device is changed from the folded state to the unfolded state, the first coupling member 1810 and the first guide member 310 are rotated in the second rotation direction in correspondence to the rotation of the first shaft 1641. The first guide bar 313 of the first guide member 310 is moved downward in a direction that becomes more distant the second guide bar 323 along the second rotation direction. The second coupling member 1820 and the second guide member 320 are rotated in the first rotation direction in correspondence to the rotation of the second shaft 1642. The second guide bar 323 of the second guide member 320 is moved downward in a direction that becomes more distant from the first guide bar 313 along the first rotation direction. The flexible area 460 of the FPCB 260 is moved along the first guide bar 313 and the second guide bar 323 that become more distant from each other. The flexible area 460 of the FPCB 260 is moved downward toward the hinge housing 250 in the area between each of the first guide member 310 and the second guide member 320 and the hinge housing 250. In the unfolded state of the electronic device, at least a portion of the flexible area 460 of the FPCB 260 is disposed closer to the bottom surface 252 of the hinge housing 250 than to the center bar 270. In the unfolded state of the electronic device, at least a portion of the flexible area 460 of the FPCB 260 is disposed to contact or be adjacent to the bottom surface 252 of the hinge housing 250.

According to an example, while the electronic device is changed from the unfolded state to the folded state, the first coupling guide pin 1814 of the first coupling member 1810 is rotated clockwise around the first shaft 1641 in correspondence to the rotation of the first shaft 1641. The first coupling guide pin 1814 of the first coupling member 1810 is moved from an upper side (or one side) to a lower side (or an opposite side) clockwise. The first guide bar 313 of the first guide member 310 rotates clockwise around the first coupling guide pin 1814. The first guide bar 313 moves from a lower side to an upper side clockwise. The second coupling guide pin 1824 of the second coupling member 1820 is rotated counterclockwise around the second shaft 1642. The second coupling guide pin 1824 is moved from an upper side to a lower side counterclockwise. The second guide bar 323 of the second guide member 320 is rotated counterclockwise around the second connection guide pin 824. The second guide bar 323 is moved from a lower side to an upper side counterclockwise. The flexible area 460 of the FPCB 260 is moved upward along the first guide bar 313 that is moved upward and the second guide bar 323 that is moved upward. In the folded state of the electronic device, the flexible area 460 of the FPCB 260 is spaced apart from the bottom surface 252 of the hinge housing 250 at a specific interval. In the folded state of the electronic device, at least a portion of the flexible area 460 of the FPCB 260 is disposed closer to the center bar 1670 than to the bottom surface 252 of the hinge housing 250.

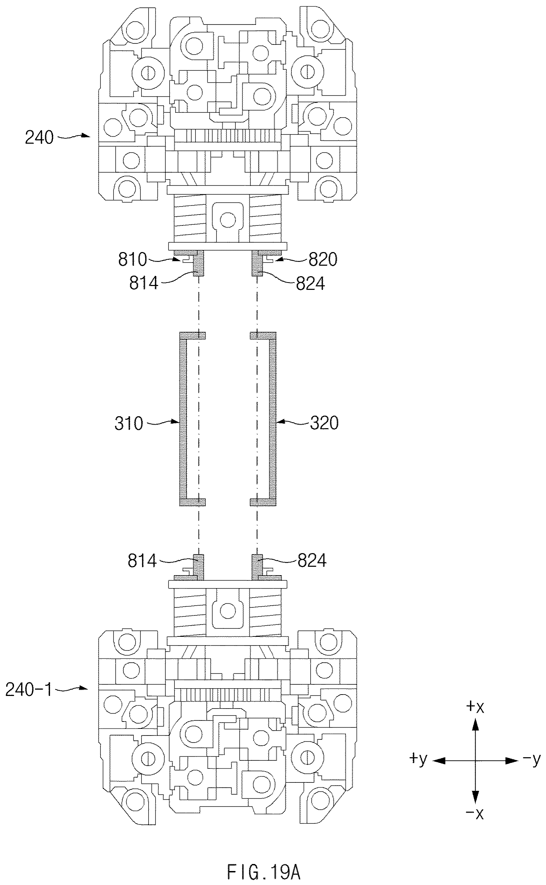

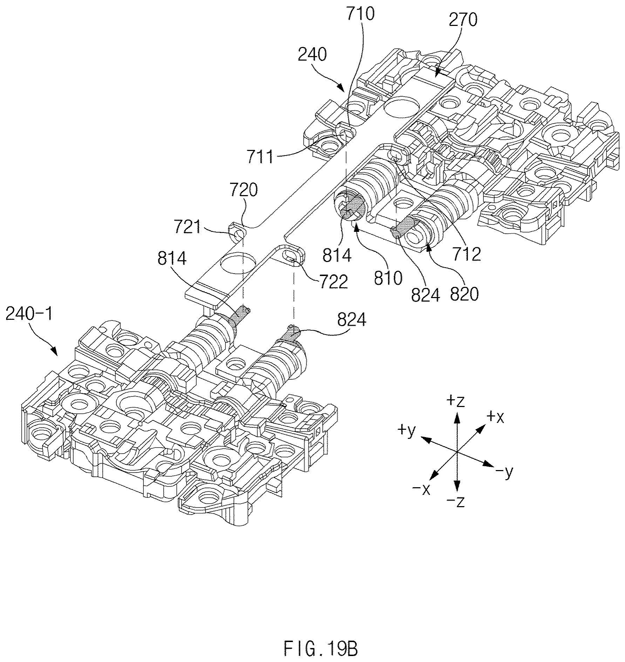

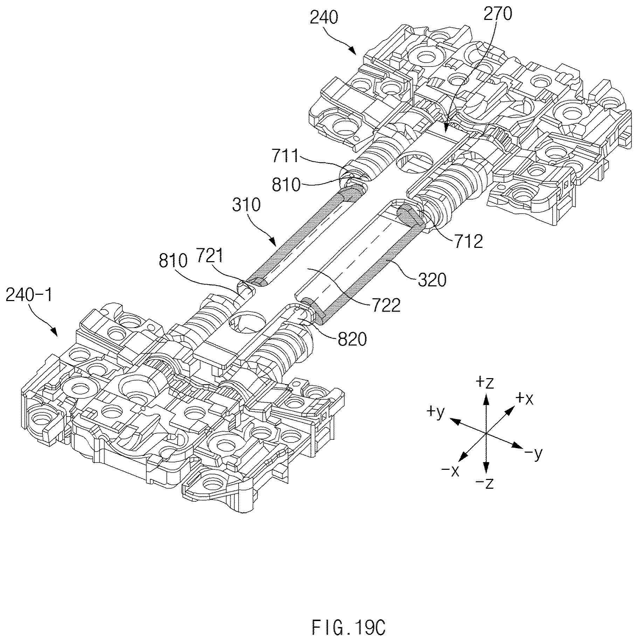

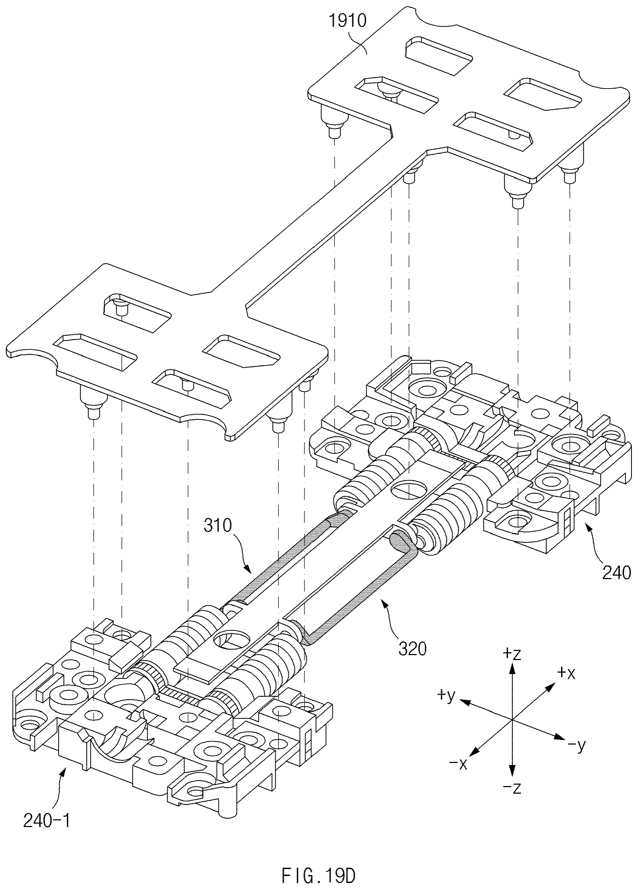

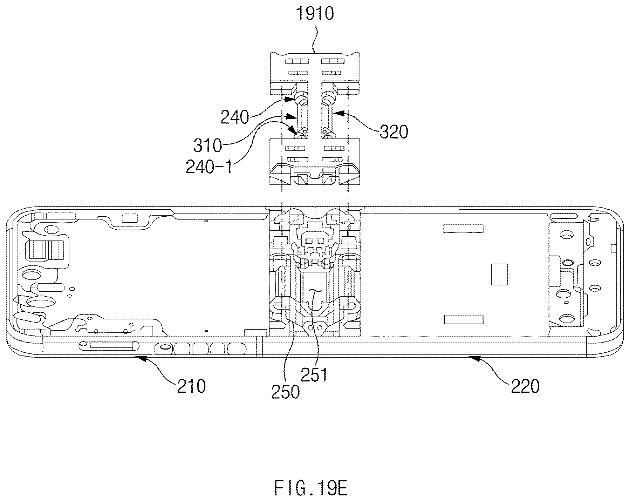

FIGS. 19A, 19B, 19C, 19D, and 19E are views illustrating a process of assembling (or coupling) an electronic device according to an example. In FIGS. 19A, 19B, 19C, 19D, and 19E, for a description of a process of assembling (or coupling) an electronic device according to an example, an assembling process that is applied to the plurality of hinge devices illustrated in FIGS. 3 to 15 will be described for example.

Referring to FIG. 19A, the electronic device according to an example includes a plurality of hinge devices 240 and 240-1 and guide members 310 and 320. The first connection member 810 of each of the plurality of hinge devices 240 and 240-1 includes a first connection guide pin 814 that is coupled to the first guide member 310. The second connection member 820 of each of the plurality of hinge devices 240 and 240-1 includes a second connection guide pin 824 that is coupled to the second guide member 320. Guide members 310 and 320 are disposed between the plurality of hinge devices 240 and 240-1. The first guide member 310 is disposed between the first connection member 810 (e.g., the first connection guide pin 814) of the first hinge device 240 and the first connection member 810 (e.g., the first connection guide pin 814) of the second hinge device 240-1. The second guide member 320 is disposed between the second connection member 820 (e.g., the second connection guide pin 824) of the first hinge device 240 and the second connection member 820 (e.g., the second connection guide pin 824) of the second hinge device 240-1.

Referring to FIG. 19B, at least one of a plurality of hinge devices 240 and 240-1 and the center bar 270 are coupled to each other. According to an example, the first connection guide pin 814 of the first connection member 810 of the first hinge device 240 is inserted into the first holding hole 711 of the center bar 270. The second connection guide pin 824 of the second connection member 820 of the first hinge device 240 is inserted into the second holding hole 712 of the center bar 270. The first connection guide pin 814 of the first connection member 810 of the second hinge device 240-1 is inserted into the third holding hole 721 of the center bar 270. The second connection guide pin 824 of the second connection member 820 of the second hinge device 240-1 is inserted into the fourth holding hole 722 of the center bar 270.

Referring to FIGS. 19B and 19C, a plurality of hinge devices 240 and 240-1 are coupled into one assembly through the first guide member 310 and the second guide member 320. At least one first connection member 810 of each of the first hinge device 240 and the second hinge device 240-1 is coupled to the center bar 270 and the first guide member 310. At least one second connection member 820 of each of the first hinge device 240 and the second hinge device 240-1 is coupled to the center bar 270 and the second guide member 320.

According to an example, the first connection guide pin 814 of the first connection member 810 of the first hinge device 240 is inserted into the first pin opening of the first guide member 310 via the first holding hole 711 of the center bar 270. The second connection guide pin 824 of the second connection member 820 of the first hinge device 240 is inserted into the second pin opening of the second guide member 320 via the second holding hole 712 of the center bar 270. The first connection guide pin 814 of the first connection member 810 of the second hinge device 240-1 is inserted into the first pin opening of the first guide member 310 via the third holding hole 721 of the center bar 270. The second connection guide pin 824 of the second connection member 820 of the second hinge device 240-1 is inserted into the second pin opening of the second guide member 320 via the fourth holding hole 722 of the center bar 270.

Referring to FIG. 19D, the plurality of hinge devices 240 and 240-1 coupled into one assembly are fixed to the fixing holder 1910. The fixing holder 1910 is coupled to the plurality of hinge devices 240 and 240-1 to feed the plurality of hinge devices 240 and 240-1 to the next assembly process.

Referring to FIG. 19E, the first hinge device 240 and the second hinge device 240-1 are moved through the fixing holder 1910 and are disposed in the hinge housing 250. Each of the first hinge device 240 and the second hinge device 240-1 is fastened to the hinge housing, the first housing 210, and the second housing 220 through a fastening member (e.g., a screw). The first hinge device 240 and the second hinge device 240-1 are accommodated in the interior space 251 in the hinge housing 250. The first hinge device 240 and/or the second hinge device 240-1 connect the first housing 210 and the second housing 220 such that the first housing 210 and the second housing 220 are rotatable.

Meanwhile, the above-described electronic device is not limited to the examples described in the drawings, and the electronic devices described in the drawing may be applied in a complex manner. As an example, the plurality of hinge devices including the center bar 270 of FIGS. 3 to 15 and the plurality of hinge devices including the center bar 1670 of FIGS. 16 to 18 may be applied to the electronic device in a complex manner. Furthermore, the position, number, and shape of the guide member, the center bar, and the shaft described in the drawings are not limited to the above-described examples, but may be changed in various ways.

On the other hand, the rotatable guide member 330 of the electronic device according to an example of this document may be applied to a foldable electronic device that is operated in an in-folding and/or out-folding method in a range of 0 to 360 degrees. The rotatable guide member 330 of the electronic device according to an example may be applied to a multi-foldable electronic device that is operated in a multi-folding manner, in which a plurality of housings (e.g., three or more housings) are alternately folded in opposite directions with respect to each other. As an example, the rotatable guide member 330 of the electronic device according to an example of the disclosure may be applied to a multi-foldable electronic device, in which in-folding and in-folding are combined, in-folding and out-folding are combined, or/or out-folding and out-folding are combined.

In an example, the rotatable guide member 330 according to the examples of the disclosure may also be applied to a variable type electronic device that is configured to selectively expand a display area. For example, because the rotatable guide member 330 according to examples of the disclosure may be applied to each folded part of the electronic device, it may be variously changed and applied to the electronic device including the folded part.

As described above, a foldable electronic device according to at least one of various examples may include a flexible display, a first housing and a second housing, a plurality of hinge devices connecting the first housing and the second housing such that the first housing and the second housing are rotatable around a folding axis, a printed circuit board extending from the first housing to the second housing across the folding axis, and a guide member disposed to be connected to at least any one of the plurality of hinge devices, between the plurality of hinge devices, and that guides movement of the flexible printed circuit board while being rotated in correspondence to movements of the first housing and the second housing.

According to an example, at least any one of the plurality of hinge devices may include at least one shaft rotated as the electronic device is changed from a folded state to an unfolded state.

According to an example, the guide member may be rotated around a rotation axis being parallel to the folding axis in correspondence to rotation of the shaft.

According to an example, the electronic device may further include a center bar disposed between the plurality of hinge devices, and that supports a partial area of the display.

According to an example, at least any one of the plurality of hinge devices may include a connection member coupled to the center bar and the guide member, and rotated around the shaft.

According to an example, the connection member may include a connection opening, into which the shaft is inserted, and a guide pin protruding toward the center bar.

According to an example, the center bar may include a holder part having a holding hole, in which the guide pin is held.

According to an example, the guide pin may be inserted into the holding hole to protrude toward the guide member further than the holder part.

According to an example, the guide member may include a guide bar disposed across the flexible printed circuit board and contacting the flexible printed circuit board, and an extension part including a pin opening coupled to the guide pin, and extending from opposite sides of the guide bar to face the holder part.

According to an example, the guide pin may be inserted into the pin opening via the holding hole.

According to an example, the guide bar may be rotated around the guide pin in correspondence to rotation of the shaft.

According to an example, the connection member may further include a rib protruding from the guide pin in a different direction from a protrusion direction of the guide pin.

The guide member may further include a rib opening disposed in the extension part, and into which the rib is inserted.

According to an example, in correspondence to rotation of the connection member, the center bar may be linearly moved and the guide member may be rotated.

According to an example, the electronic device may further include a center bar disposed between the plurality of hinge devices, and that supports a partial area of the display.

According to an example, at least any one of the plurality of hinge devices may include a coupling member coupled to the guide member, and rotated around the shaft.

According to an example, the guide member may include a guide bar disposed across the flexible printed circuit board and contacting the flexible printed circuit board, and an extension part including a pin opening, and extending from opposite sides of the guide bar to face the coupling member.

According to an example, the coupling member may include a coupling opening, into which the shaft is inserted, and a guide pin inserted into the pin opening.

According to an example, the coupling member may further include a rib protruding from the guide pin in a different direction from a protrusion direction of the guide pin.

According to an example, the guide member may further include a rib opening disposed in the extension part, and into which the rib is inserted.

According to an example, the guide member may be rotated in correspondence to rotation of the coupling member in a state, in which the center bar is fixed.

According to an example, the shaft may include a first shaft rotated as the electronic device is changed from a folded state or an unfolded state, and a second shaft rotated in an opposite direction to that of the first shaft as the electronic device is changed from the folded state or the unfolded state.

According to an example, the guide member may include a first guide member rotated in correspondence to rotation of the first shaft, and a second guide member rotated in an opposite direction to that of the first guide member in correspondence to rotation of the second shaft.

According to an example, the electronic device may further include a hinge housing, on which at least any one of the plurality of hinge devices is seated.

According to an example, a portion of the flexible printed circuit board may be disposed between the guide member and the hinge housing.

A foldable electronic device according to at least one of various examples may include a flexible display, a first housing and a second housing, a plurality of hinge devices connecting the first housing and the second housing such that the first housing and the second housing are rotatable around a folding axis, a hinge housing, on which at least any one of the plurality of hinge devices are seated, and including at least one side wall being parallel to the folding axis, a guide member disposed adjacent to the side wall, and rotated in correspondence to movements of the first housing and the second housing, and a flexible printed circuit board extending from the first housing to the second housing across a space between the guide member and the side wall.

According to an example, at least any one of the plurality of hinge devices may include at least one shaft rotated as the electronic device is changed from a folded state to an unfolded state.

According to an example, the guide member may be rotated around a rotation axis being parallel to the shaft in correspondence to rotation of the shaft.

According to an example, the electronic may further include a center bar disposed between the plurality of hinge devices, and that supports a partial area of the flexible display.

According to an example, the guide member may include a first guide member disposed on one side of the center bar, and a second guide member disposed on an opposite side of the center bar.

According to an example, in correspondence to rotation of the shaft, the center bar may be linearly moved and the guide member may be rotated.

According to an example, the guide member may be rotated in correspondence to rotation of the shaft in a state, in which the center bar is fixed.

A foldable electronic device according to at least one of various examples may include a first housing and a second housing, a plurality of hinge devices connecting the first housing and the second housing such that the first housing and the second housing are rotatable around a folding axis, a flexible printed circuit board extending from the first housing to the second housing across the folding axis, and a guide member that guides movement of the flexible printed circuit board while being rotated in correspondence to movements of the first housing and the second housing.

It should be appreciated that certain embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, "adapted to or configured to", depending on the context, for example, hardware or software "suitable for," "having the ability to," "modified to, Can be used interchangeably with ""made to," "capable of," or "designed to." In some contexts, the expression "a device configured to" may mean that the device is "capable of" with other devices or components. For example, the phrase "a processor configured (or configured to perform) A, B, and C" refers to a dedicated processor (e.g., an embedded processor), or one or more programs stored in a memory device, for performing the corresponding operations, thereby executing one or more programs; It may mean a generalpurpose processor (e.g., CPU or AP) capable of performing corresponding operations.

As used herein, the term "module" may include a unit implemented in hardware, software, or firmware, and may interchangeably be used with other terms, for example, "logic", "logic block", "part", or "circuitry". A "module" may be implemented mechanically or electronically, for example, known or to be developed, application-specific integrated circuit (ASIC) chips, fieldprogrammable gate arrays (FPGAs), or a programmable logic device.

At least a portion of an apparatus (e.g., modules or functions thereof) or a method (e.g., operations) according to various embodiments may be implemented as instructions stored in a computer-readable storage medium (e.g., memory) in the form of a program module. When the instruction is executed by a processor (e.g., a processor), the processor may perform a function corresponding to the instruction. Computer-readable recording media include hard disks, floppy disks, magnetic media (e.g., magnetic tape), optical recording media (e.g., CD-ROM, DVD, magneto-optical media (e.g., floppy disks), builtin memory, etc.) An instruction may include code generated by a compiler or code that can be executed by an interpreter.

According to certain embodiments, each component (e.g., a module or a program) of the above-described components may include a single entity or multiple entities and some of multiple entities may be separately disposed on the other components. According to certain embodiments, one or more of the above-described components may be omitted, or one or more other components may be added. Alternatively or additionally, a plurality of components (e.g., modules or programs) may be integrated into a single component. In such a case, according to certain embodiments, the integrated component may still perform one or more functions of each of the plurality of components in the same or similar manner as they are performed by a corresponding one of the plurality of components before the integration. According to certain embodiments, operations performed by the module, the program, or another component may be carried out sequentially, in parallel, repeatedly, or heuristically, or one or more of the operations may be executed in a different order or omitted, or one or more other operations may be added.

## Claims

1. A foldable electronic device comprising:
a flexible display (230);
a first housing (210) and a second housing (220);
a plurality of hinge devices (240, 240-1) coupled to the first housing and the second housing such that the first housing and the second housing are rotatable around a folding axis;
a flexible printed circuit board (260) extending from the first housing to the second housing across the folding axis; and
a guide member (330) disposed to be coupled to at least any one of the plurality of hinge devices, between the plurality of hinge devices, and configured to guide movement of the flexible printed circuit board (260) while being rotated in correspondence to movements of the first housing and the second housing.

2. The electronic device of claim 1, wherein at least one of the plurality of hinge devices (240, 240-1) includes:
at least one shaft (1241, 1242) rotated as the electronic device is changed from a folded state to an unfolded state, and
wherein the guide member (330) is rotated around a rotation axis being parallel to the folding axis in correspondence to rotation of the shaft (1241, 1242).

3. The electronic device of claim 2, further comprising:
a center bar (270) disposed between the plurality of hinge devices (240, 240-1), and configured to support a partial area of the display,
wherein at least one of the plurality of hinge devices (240, 240-1) includes:
a connection member (810, ,820) coupled to the center bar (270) and the guide member (330), and rotated around the shaft (1241, 1242).

4. The electronic device of claim 3, wherein the connection member (810, 820) includes:
a connection opening (812, 822), into which the shaft (1241, 1242) is inserted; and
a guide pin (814) protruding toward the center bar (270),
wherein the center bar (270) includes:
a holder part (710) having a holding hole (711, 712), in which the guide pin (814, 824) is held, and
wherein the guide pin (814, 824) is inserted into the holding hole (711, 712) to protrude further toward the guide member (330) than the holder part (710).

5. The electronic device of claim 4, wherein the guide member (330) includes:
a guide bar (313, 323) disposed across the flexible printed circuit board (260) and contacting the flexible printed circuit board (260); and
an extension part (311, 321) including a pin opening (315, 325) coupled to the guide pin (814, 824), and extending from opposite sides of the guide bar (313) to face the holder part (710), and
wherein the guide pin (814, 824) is inserted into the pin opening via the holding hole (711, 712).

6. The electronic device of claim 5, wherein the guide bar (313, 314) is rotated around the guide pin (814, 824) in correspondence to rotation of the shaft.

7. The electronic device of claim 5, wherein the connection member (810, 820) further includes:
a rib (816, 826) protruding from the guide pin (814, 824) in a different direction from a protrusion direction of the guide pin (814, 824),
wherein the guide member (330) further includes:
a rib opening (316, 326) disposed in the extension part (311, 321), and into which the rib (816, 826) is inserted.

8. The electronic device of any one of claims 3, 4, 5, 6, and 7, wherein in correspondence to rotation of the connection member (810, 820), the center bar (270) is linearly moved and the guide member (330) is rotated.

9. The electronic device of claim 2, further comprising:
a center bar (1670) disposed between the plurality of hinge devices (240, 240-1), and configured to support a partial area of the display,
wherein at least any one of the plurality of hinge devices includes:
a coupling member (1810, 1820) coupled to the guide member (330), and rotated around the shaft.

10. The electronic device of claim 9, wherein the guide member (330) includes:
a guide bar (313, 323) disposed across the flexible printed circuit board (260) and contacting the flexible printed circuit board (260); and
an extension part (311, 321) including a pin opening (315, 325), and extending from opposite sides of the guide bar (313, 323) to face the coupling member (1810, 1820).

11. The electronic device of claim 10, wherein the coupling member (1810, 1820) includes:
a coupling opening (1812), into which the shaft is inserted; and
a guide pin (1814, 1824) inserted into the pin opening (315, 325).

12. The electronic device of claim 11, wherein the coupling member (1810, 1820) further includes:
a rib (1816, 1826) protruding from the guide pin in a different direction from a protrusion direction of the guide pin (1814, 1824), and
wherein the guide member (330) further includes:
a rib opening (316, 326) disposed in the extension part (311, 321), and into which the rib (1816, 1826) is inserted.

13. The electronic device of any one of claims 9, 10, 11, and 12, wherein the guide member (330) is rotated in correspondence to rotation of the coupling member (1810, 1820) in a state, in which the center bar (1670) is fixed.

14. The electronic device of claim 2, wherein the shaft includes:
a first shaft (1241) rotated as the electronic device is changed from a folded state or an unfolded state; and
a second shaft (1242) rotated in an opposite direction to that of the first shaft as the electronic device is changed from the folded state or the unfolded state, and
wherein the guide member (330) includes:
a first guide member (310) rotated in correspondence to rotation of the first shaft (1241); and
a second guide member (320) rotated in an opposite direction to that of the first guide member (310) in correspondence to rotation of the second shaft (1242).

15. The electronic device of claim 1, further comprising:
a hinge housing (250), on which at least any one of the plurality of hinge devices (240, 240-1) is seated,
wherein a portion of the flexible printed circuit board (260) is disposed between the guide member (330) and the hinge housing (250).
